(19) **Europäisches Patentamt / European Patent Office / Office européen des brevets**

(11) **EP 4 759 867 A1**

(12) # EUROPEAN PATENT APPLICATION
published in accordance with Art. 153(4) EPC

(43) Date of publication:
**17.06.2026 Bulletin 2026/25**

(21) Application number: **24851871.4**

(22) Date of filing: **07.08.2024**

(51) International Patent Classification (IPC):
**C08J 5/24** (2006.01)

(52) Cooperative Patent Classification (CPC):
**C08J 5/24**

(86) International application number:
**PCT/JP2024/028210**

(87) International publication number:
**WO 2025/033448 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.08.2023 JP 2023128983**

(71) Applicant: **Toray Industries, Inc.**
**Tokyo 103-8666 (JP)**

(72) Inventors:
• **KONO, Yoshikazu**
  Iyo-gun, Ehime 791-3193 (JP)
• **SAKATA, Hiroaki**
  Iyo-gun, Ehime 791-3193 (JP)
• **SUGIMOTO, Atsuki**
  Iyo-gun, Ehime 791-3193 (JP)
• **HAYASHI, Yuki**
  Iyo-gun, Ehime 791-3193 (JP)

(74) Representative: **Mewburn Ellis LLP**
**Aurora Building**
**Counterslip**
**Bristol BS1 6BX (GB)**

(54) **PREPREG, CARBON FIBER-REINFORCED COMPOSITE MATERIAL, AND STRUCTURE**

(57) A problem to be addressed by the present invention is to provide a prepreg that can stably yield a given level or higher level of conductivity between adjacent carbon fibers, and simultaneously maintain high impact resistance, even in a case where unevenness is generated in the interlayer thickness between the layers in a CFRP molding. The prepreg includes a carbon fiber impregnated with a matrix resin, wherein the matrix resin is an epoxy resin composition containing at least an epoxy resin, a curing agent, and conductive particles, wherein a particle size distribution of the conductive particles has a coefficient of variation of 40% or more.

EP 4 759 867 A1

**Description**

Technical Field

The present invention relates to a prepreg, a carbon fiber reinforced composite material, and a structure produced using the carbon fiber reinforced composite material.

Background Art

Conventionally, a fiber-reinforced composite material composed of reinforcing fibers and a matrix resin, although lightweight, excels in mechanical properties such as strength and stiffness, heat resistance, and in addition, corrosion resistance, and thus, is widely used in many fields such as aerospace, automobiles, railroad vehicles, ships, civil engineering and construction, and sporting goods. In particular, in the applications that require high heat-resistant performance, a fiber-reinforced composite material produced using continuous reinforcing fibers is used. A reinforcing fiber to be used is a carbon fiber (hereinafter abbreviated as a "CF" in some cases) having excellent specific strength and specific elastic modulus. A matrix resin to be used is often a thermosetting resin, in particular an epoxy resin having excellent adhesiveness to CF, heat resistance, elastic modulus, and small cure shrinkage. In recent years, as the applications of a carbon fiber reinforced composite material (hereinafter abbreviated as a "CFRP" in some cases) have increased, the properties required for a CFRP have become even more stringent.

A CFRP can be obtained by forming CFs into a sheet, impregnating the resultant CF sheet with a matrix resin to form a prepreg, and then molding the prepreg. Examples of the CF sheet include: a UD sheet obtained by arranging CFs in a unidirectional (UD) plane; and a CF fabric obtained by arranging CFs multidirectionally or arbitrarily to form a sheet. A UD sheet tends to be used in a case where the mechanical properties of a CFRP are prioritized. A CF fabric tends to be used in a case where a CFRP in complicated shape is produced. There is also a case where a UD sheet and a CF fabric are used in combination. In the applications of structural materials for aircrafts, mechanical properties are prioritized. Thus, what is used widely is a CFRP produced by molding a laminate in which prepregs containing a UD sheet are laminated multidirectionally.

Incidentally, a CF is an electrical conductor, and a matrix resin is generally an insulator in many cases. Accordingly, a matrix resin layer is formed between adjacent CF sheets (i.e., in an interlayer) in a CFRP, and acts as an insulating layer in some cases. It should be noted that a CFRP has relatively high conductivity in the fiber-axis direction (hereinafter abbreviated as the "fiber direction") because a CF itself provides a conductive route. On the other hand, in the thickness direction of a CFRP (hereinafter abbreviated as the perpendicular direction), the contact between the CFs forms a conductive route, but the conductivity in the perpendicular direction is approximately 1/1,000 of the conductivity in the fiber direction. Furthermore, even the conductivity in the fiber direction of a CFRP is approximately 1/1000 of the conductivity of a metal such as aluminium. In this manner, a CFRP has lower conductivity than a metal material, and in addition, has anisotropy in the conductivity in the direction perpendicular to the fiber direction. Accordingly, a CFRP through which a given level of electric current flows has a higher voltage drop than a metal material. Furthermore, in a CFRP composed of a plurality of different CF sheets having different angles of fiber orientation, the electric current distribution is very complicated.

Because a CFRP has such complicated electrical properties, a CFRP used as a material for an aircraft raises concerns regarding damage due to lightning. As a safety measure thereagainst, a lightning protection system has been built up, for example, by attaching a metal mesh, or covering a potentially spark-generating place with a sealant. However, such a lightning protection system has problems of increased weight and increased cost. Thus, there is a demand for the CFRP itself to exhibit stable electrical properties.

One such spark generated around a fuel tank is known as 'edge glow,' which is a luminous phenomenon occurring at the edge surface of a member. The edge glow is being studied to elucidate the mechanism of the occurrence. Non-Patent Literature 1 compares an electric potential analysis of a CFRP and the experimental results of the generation of an edge glow, and has revealed that increasing conductivity in the interlayer is effective in inhibiting edge glow.

It is commonly considered that enhancing the conductivity of the CFRP in the thickness direction is effective for improving interlayer conductivity. Many material designs have been proposed for this purpose, including a method of arranging conductive particles in the interlayer to achieve conduction. The techniques disclosed in Patent Literature 1 to 5 have a significant effect of enhancing the conductivity, in which the techniques enhance the conductance, utilizing unevenness in the interlayer thickness, the particle size distribution of the conductive particles, and addition of a conductive additive.

Patent Literature 1 and Patent Literature 2 disclose a technique for arranging conductive particles between adjacent CF sheets (i.e., in an interlayer) in a CFRP, in which the particles have a narrow particle size distribution. Patent Literature 3 discloses a technique for adjusting the average particle size of the conductive particles with respect to the interlayer thickness. Using these inventions makes it possible that more conductive particles are arranged in an interlayer having a desired thickness, for a conduction purpose. Patent Literature 4 discloses a technique in which the thickness of a resin layer constituting the outside of a fiber layer in a prepreg or the thickness of an interlayer in a CFRP is varied from the average thickness depending on the position to thereby achieve interlayer conduction without necessarily having conductive particles. Patent Literature 5 discloses a technique for further enhancing conductivity by forming a prepreg having a matrix resin in which conductive particles having a particle size of 1 $\mu$m or less are used in combination with conductive particles having a particle size of 5 $\mu$m or more. In this regard, Patent Literature 3 (page 5, lines 28 to 30), Patent Literature 4 (page 6, lines 9 to 11), and Patent Literature 5 (paragraphs [0034] and [0035]) all suggest that narrowing the particle size distribution of conductive particles is preferable from the viewpoints of conductivity, mechanical properties, and processability.

Citation List

Patent Literature

Patent Literature 1: JP 2011-213991 A
Patent Literature 2: WO 2008/056123
Patent Literature 3: WO 2011/027160
Patent Literature 4: WO 2012/084197
Patent Literature 5: WO 2012/124450

Non-Patent Literature

Non-Patent Literature 1: R. B. Greegor et al., "Finite Element Simulation and Experimental Analysis of Edge Glow for a Generic, 16-Ply Carbon Fiber Reinforced Plastic Composite Laminate", ICOLSE 15 Paper, 2015

Summary of Invention

Technical Problem

The techniques described in Patent Literature 1 to 5 achieve high conductivity by using conductive particles controlled to a narrow particle size distribution through high-precision classification, but have not only the problems of the need for a high technical level of classification and a significant increase in raw material cost but also the problem of not adequately considering unevenness that can be caused in conductivity by the flow of the matrix resin within a molding. Even if high conductivity can be exhibited under specific conditions, but if the conductivity cannot be stably exhibited within a molding, the molding leads to resulting in an increased risk of structural damage when struck by lightning. In addition, if the unevenness is large, the potential of the prepreg cannot be correctly assessed. Thus, any introduction of an excessive lightning protection system results in an increase in the weight and cost of an aircraft.

A concept common to Patent Literature 1 to 5 is to arrange conductive particles between adjacent CF layers, in which the particles are large enough to be in sufficient contact with the adjacent CF layers so as to function as a conductive path. One conceivable method based on this concept is to use conductive particles with a sufficiently large particle size, corresponding to the maximum expected thickness of the interlayer between adjacent CF layers, in order to reduce unevenness in conductivity within the molding. However, it is known that conductive particles having a large particle size result in staying deeply sunk in the CF layers in a CFRP, and excessively disrupting the linearity of the CF arrangement to thereby worsen the mechanical properties. In addition, large conductive particles present many problems from a processability viewpoint. Specifically, in a case where a process for producing a resin composition film containing particles is adopted as a prepreg production step, particles having a large particle size pass through a coater less easily, thus being more likely to localize particles having a large particle size, or clogging the clearance of the coater to thereby become the starting point of a streak on the film, and lead to unevenness in the areal weight of the resin. In this manner, there are many process-related problems in relation to factors that can affect the conductivity. One conceivable approach is to classify conductive particles highly accurately within the range of distribution of particle sizes that are equal to or greater than the largest thickness anticipated between adjacent CF layers, and do not cause impairment from a process viewpoint or a mechanical properties viewpoint. However, this approach involves the problem of the need for an even higher level of classification than the above-described method and the problem of increased cost of raw materials, and thus, is not realistic. Additionally, in light of the unevenness in the conductivity, it is conceivable to significantly raise the conductivity. However, as described in Patent Literature 3, conductive particles, if contained in a large amount in a CFRP, adversely affect the mechanical properties of the CFRP, and thus, have their limitations on the possible amount of blending in the CFRP. The effectiveness of this approach is limited.. In this manner, it has been difficult to decrease the unevenness in the conductivity of a molding with the mechanical properties maintained.

A problem to be addressed by the present invention is to contribute to simplifying a conventional lightning protection system, reducing the weight and cost of the aircraft, by providing a prepreg that can stably yield a given level or higher level of interlayer conductivity between adjacent carbon fiber layers in a CFRP molding, while maintaining, at a high level, the mechanical properties of the CFRP, in particular the impact resistance which is important for aircraft structural material applications.

Solution to Problem

To solve the above-described problems, the present invention is characterized by the following features:.

[1] A prepreg comprising a carbon fiber impregnated with a matrix resin, wherein all or part of the matrix resin is an epoxy resin composition containing at least an epoxy resin, a curing agent, and conductive particles, wherein particle size distribution of the conductive particles has a coefficient of variation of 40% or more.

[2] The prepreg according to [1], wherein median diameter (D50) of the conductive particles is equal to or larger than average radius of the carbon fiber.

[3] The prepreg according to [1] or [2], wherein D99 ($\mu$m) of the conductive particle is equal to or smaller than $0.33 \times A$, wherein A is a value expressed in g/m$^2$, and obtained by rounding fiber areal weight in the prepreg to the nearest whole number.

[4] The prepreg according to any one of [1] to [3], wherein D50 ($\mu$m) of the conductive particles is equal to or smaller than $0.18 \times A$,

wherein A is a value expressed in g/m$^2$, and obtained by rounding fiber areal weight in the prepreg to the nearest whole number.

[5] The prepreg according to any one of [1] to [4], wherein the epoxy resin composition has a minimum viscosity of 0.6 Pa·s or more, as measured under conditions of an angular frequency of 10 rad/s and a temperature ramp rate of 2°C/min.

[6] The prepreg according to any one of [1] to [5], wherein coefficient of variation of thickness in one interlayer resin layer in a carbon fiber reinforced composite material is 26% or more and 45% or less, wherein the carbon fiber reinforced composite material is obtained by pseudo-isotropically laminating the prepreg in a 16-ply form having a [+45°/0°/-45°/90°]2s constitution, and curing the resultant prepreg under heat and pressure under conditions of a temperature of 180°C, a pressure of 0.6 MPa, and a temperature ramp rate of 1.7°C/minute for 2 hours, using an autoclave.

[7] The prepreg according to any one of [1] to [6], wherein particle size distribution of the conductive particle has a kurtosis of 5 or less.

[8] The prepreg according to any one of [1] to [7], wherein the conductive particles are carbon particles or conductive polyamide particles.

[9] The prepreg according to any one of [1] to [8], further comprising non-conductive polyamide particles.

[10] The prepreg according to [9], wherein mass ratio of the non-conductive polyamide particles is 4 mass% or more and 15 mass% or less, assuming that mass of the epoxy resin composition is 100 mass%.

[11] A carbon fiber reinforced composite material obtained by laminating two or more sheets of the prepreg according to any one of [1] to [10], and heat-curing the resultant prepreg.

[12] The carbon fiber reinforced composite material according to [11], wherein coefficient of variation of thickness in one interlayer resin layer is 26% or more and 45% or less.

[13] The carbon fiber reinforced composite material according to [11] or [12], wherein conductivity between adjacent carbon fibers is 0.1 S/m or more.

[14] A structure obtained using the carbon fiber reinforced composite material according to any one of [11] to [13], wherein shape of said structure is a shape of a structure selected from the group consisting of a flat-plate-shaped structure, cylindrical structure, box-shaped structure, C-shaped structure, H-shaped structure, L-shaped structure, T-shaped structure, I-shaped structure, Z-shaped structure, and hat-shaped structure.

Advantageous Effects of Invention

The present invention makes it possible to obtain a prepreg that can stably yield a given level or higher level of interlayer conductivity between adjacent carbon fiber layers while exhibiting the excellent impact resistance of a CFRP, even in a case where unevenness is generated in the interlayer thickness between the layers after the CFRP is formed. In addition, utilizing such a prepreg and a carbon fiber reinforced composite material for an aircraft enables a lightning protection system to be more efficient as a whole.

Brief Description of Drawings

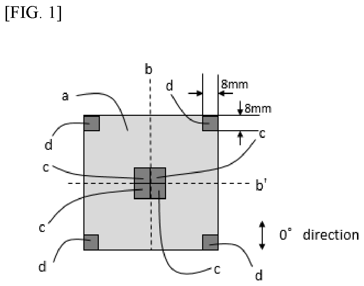

[FIG. 1] FIG. 1 is a top view of a panel of a CFRP produced in the Examples section.

Description of Embodiments

The present invention is described below in further detail. However, the present invention is not construed to be limited to the below-mentioned specific examples.

<Carbon fiber (CF)>

In a prepreg according to the present invention, a CF is used in the form of a CF bundle of CFs. For example, usually approximately 1,000 to 1,000,000 single CFs assembled in tape form are called a "tow", and such tows can be arranged to yield a sheet-like CF bundle. The CF sheet is called a UD sheet or a CF fabric in accordance with how the CFs are arranged. In the UD sheet, the CFs are arranged unidirectionally (UD) in the longitudinal direction of the CFs. In the CF fabric, the CFs are arranged multidirectionally. Examples of the CF fabric that can be used include not only woven fabrics, knitted fabrics, and the like but also two-dimensionally and multiaxially arranged CFs and arbitrarily oriented CFs such as nonwoven fabrics, mats, and paper.

<Epoxy resin>

In a prepreg according to the present invention, an epoxy resin composition including at least an epoxy resin, a curing agent, and conductive particles is used as a matrix resin. In this regard, an epoxy resin composition containing an epoxy resin and a curing agent but not containing conductive particles can also be used in combination as a matrix resin, as in the case of the below-described two-step impregnation method. As the epoxy resin, an epoxy resin the precursor of which is a compound having an amine, phenol, or carbon-carbon double bond is preferable. Specific examples include, but are not limited to: epoxy resins the precursors of which are amines, such as various isomers of tetraglycidyl diaminodiphenylmethane, triglycidyl-p-aminophenol, triglycidyl-m-aminophenol, and triglycidyl aminocresol; epoxy resins the precursors of which are phenols, such as bisphenol A type epoxy resins, bisphenol F type epoxy resins, bisphenol S type epoxy resins, phenol novolac type epoxy resins, and cresol novolac type epoxy resins; epoxy resins the precursors of which are compounds having a carbon-carbon double bond, such as alicyclic epoxy resins; and the like. To enhance the tensile strength of a CFRP, it is effective to decrease the cross-linking density of the matrix resin, but such a decrease tends to decrease the heat resistance and the elastic modulus. Accordingly, from the viewpoint of enhancing the heat resistance and the tensile modulus, it is preferable to use a dicyclopentadiene type epoxy resin having a rigid backbone or a glycidyl aniline type epoxy resin that is a pendant type epoxy resin. An epoxy resin the precursor of which is an aromatic amine and which is typified by tetraglycidyl diaminodiphenylmethane (N,N,N',N'-tetraglycidyl-4,4'-diaminodiphenylmethane) is most suitable for the present invention because the epoxy resin has good heat resistance and good adhesiveness to reinforcing fiber.

<Curing agent>

As the curing agent, a compound having an active group capable of reacting with an epoxy group can be used. Preferably, compounds having an amino group, an acid anhydride group, or an azido group are suitable. Specifically, various isomers of dicyandiamide and diaminodiphenyl sulfone are, and amino benzoic acid esters are, suitable.

<Conductive particles>

According to the present invention, a prepreg in which CF sheets are impregnated with the above-described matrix resin is produced. Molding this prepreg can yield a CFRP. In this case, the prepreg has a considerable amount of the matrix resin layer in the upper face and lower face of the CF sheet. Thus, the prepreg laminate and the CFRP have a resin layer sandwiched between a carbon fiber layer (hereinafter referred to as the "CF layer" in some cases) containing the matrix resin and the CF sheet and an adjacent CF layer. Accordingly, the interlayer thickness between the adjacent carbon fiber layers and the thickness of the interlayer resin layer present between the carbon fiber layers have the same meaning. In the present invention, conductive particles are arranged in the resin layer present between adjacent CF layers (the resin layer is referred to as the "interlayer resin layer"). The conductive particles form a portion serving to connect the adjacent CF layers electrically, thereby providing conduction in the interlayer. This means that the conductive particles are substantially in contact with the CF layers present on and under the interlayer resin layer, thus forming a conductive path.

Conductive particles used for a prepreg according to the present invention can be particles that behave as an electrically good conductor, and the particles are not limited to particles composed of a conductor alone. The volume resistivity of the conductive particles is preferably 10 $\Omega$cm or less, more preferably 5 $\Omega$cm or less, and still more preferably 1 $\Omega$cm or less. Having the volume resistivity within this range makes it possible to form a conductive route in the interlayer resin layer, thereby enhancing the conductivity in the thickness direction. Here, the volume resistivity can be calculated by setting a sample in a cylindrical cell having four-point probe electrodes, and measuring the thickness and resistance of the sample with a pressure of 60 MPa applied to the sample.

Specific examples of such conductive particles that can be used include: metal particles; metal oxide particles; metal-coated inorganic particles and organic polymer particles; conductive polymer particles such as polyacetylene particles, polyaniline particles, polypyrrole particles, polythiophene particles, polyisothianaphthene particles, polyethylenedioxythiophene particles, and polyamide particles; and carbon particles. Among these, carbon particles and polyamide particles provided with conductivity (conductive polyamide particles) are preferable.

Carbon particles have no problem of corrosion even when used for aircrafts, and thus, are used preferably. For the carbon particles, crystalline carbon and amorphous carbon are preferably used. Specific examples of the amorphous carbon include: "BELLPEARL (registered trademark)" C-600, C-800, and C-2000 (manufactured by Air Water Inc.); "NICABEADS (registered trademark)" ICB, PC, and MC (manufactured by Nippon Carbon Co., Ltd.); GLASSY CARBON (manufactured by Tokai Carbon Co., Ltd.); high-purity artificial graphite SG series, SGB series, and SN series (manufactured by SEC Carbon Co., Ltd.); and SPHERICAL CARBON (manufactured by Gunei Chemical Industry Co., Ltd.).

Conductive polyamide particles are conductive, and simultaneously can provide a CFRP with impact resistance performance that is a function of the below-described polyamide particles. Thus, conductive polyamide particles are used preferably. The conductive polyamide particles can be obtained by providing conductivity to the below-described non-conductive polyamide particles. Means for providing polyamide particles with conductivity is not particularly limited. Examples of means to be used include; coating with metal, a conductive polymer, or a conductive nanomaterial; and dispersing a conductive polymer or a conductive nanomaterial in the polyamide particles. Among these, the method of coating with metal and the method of dispersing particulate conductive nanomaterials in the particles are suitably used from the viewpoint of achieving both conductivity and impact resistance. The conductive nanomaterial is not particularly limited. Examples thereof include carbon nanotubes, carbon black, and graphene. The conductive particles preferably having an aspect ratio of 1.5 or less are used.

<Particle size distribution of conductive particles>

The median diameter (also referred to as D50) of conductive particles used in the present invention is preferably equal to or greater than the average radius of the CFs. As used herein, the average radius of the CFs is the average radius of a single fiber. The median diameter is preferably two or more times as long as the average radius of the CFs (i.e., equal to or longer than the average diameter of the CFs) and more preferably four or more times as long as the average radius of the CFs (i.e., two or more times as long as the average diameter of the CFs). The upper limit is not particularly limited. However, from the viewpoints of decreasing the unevenness in the interlayer conductivity and achieving a high CAI, the upper limit desirably satisfies the below-described 0.18 $\times$ A ($\mu$m) or less depending on the areal weight of the CF.

Here, D50 and the below-described D10, D90, and D99 are as follows: D50 is a particle size at which the ratio of the number of particles having a particle size equal to or smaller than D50 is 50%; D10 is a particle size at which the ratio of the number of particles having a particle size equal to or smaller than D10 is 10%; D90 is a particle size at which the ratio of the number of particles having a particle size equal to or smaller than D90 is 90%; and D99 is a particle size at which the ratio of the number of particles having a particle size equal to or smaller than D99 is 99%. These can be easily determined from a graph with the particle size as the abscissa and the cumulative relative frequency (%) as the ordinate.

Having the median diameter in the above-described range makes it possible to decrease the unevenness caused in conductivity in the interlayer between adjacent CF layers by the intrusion of small-diameter conductive particles into the CF layers. In addition, this makes it possible to prevent a crack due to impact from propagating into the CF layer in a CFRP along the small-diameter conductive particles that have invaded the CF layer, and to inhibit a decrease in the below-described CAI (compression strength after impact).

In addition, to use a CFRP as a member of an aircraft, it is generally necessary to adjust the carbon fiber areal weight (mass per unit area) in a prepreg in accordance with a portion for use of the CFRP, and depending on the purpose. In a case where the areal weight of the CF is changed, and where the volume fraction of the CF in the CFRP is kept constant, the interlayer thickness changes. In the present invention, the upper limit of D50 (here, the unit of D50 is $\mu$m) of the conductive particles is preferably equal to or smaller than 0.18 $\times$ A, more preferably equal to or smaller than 0.15 $\times$ A, and still more preferably equal to or smaller than 0.13 $\times$ A, wherein A is a value expressed in g/m$^2$, and obtained by rounding the carbon fiber areal weight in the prepreg to the nearest whole number. The lower limit is not particularly limited, but is preferably equal to or greater than 0.05 $\times$ A and more preferably equal to or greater than 0.06 $\times$ A. In this regard, the particle size and the areal weight are different in unit, but the preferable range of D50 is determined from the correlation between the areal weight and the particle size (the same applies to the relationship between the below-described D99 and the carbon fiber areal weight in the prepreg).

Having the upper limit of D50 within the above-described range makes it possible to further decrease the number of conductive particles that are sunk too deeply in the CF layer, thus disrupting the linearity of the CF arrangement, and to thereby achieve a high CAI. In addition, having such an upper limit results in increasing the number of conductive particles that can function as a conduction path between adjacent CF layers, assuming that the conductive particles remain the same in mass. Thus, having such an upper limit is preferable.

Next, a procedure for obtaining the median diameter of conductive particles is described. A face of a prepreg is observed under a laser microscope (for example, a digital microscope VHX-5000, manufactured by Keyence Corporation) at a magnification of 200 times or more. The diameter of a circle inscribed in the periphery of a conductive particle in the image observed is taken as the particle size, which is determined in micrometers to the second decimal place, and rounded to the nearest first decimal place to give a value to the first decimal place. This is performed on each of 1000 arbitrarily selected particles. However, any particle the inscribed circle of which has a diameter of less than 0.5 $\mu$m is excluded from the measurement. In this regard, in a case where a second resin composition film containing conductive particles is available as an observation object, the film may be used as the observation object. Regarding the particle sizes of 1000 particles in the prepreg and the second resin composition film, the median value (i.e., the average of the diameters of the 500th and 501st particles when the 1000 particles are arranged in ascending order of particle size) is regarded as the median diameter (D50) in the particle size distribution of the conductive particles as a subject.

In addition, the below-described D10 can also be determined from the average of the diameters of the 100th and 101st particles in ascending order of particle size. D10 is preferably equal to or greater than the average radius of the CFs, more preferably two or more times as great as the average radius of the CFs (i.e., equal to or greater than the average diameter of the CF), and still more preferably three or more times as great as the average radius of the CFs (i.e., 1.5 or more times as great as the average diameter of the CF).

This range makes it possible to decrease the unevenness caused in the interlayer conductivity between adjacent carbon fiber layers by the intrusion of conductive particles having a small diameter into the CF layers, and thus, is suitable. In addition, this makes it possible to prevent a crack due to impact from propagating into the CF layer in a CFRP along the small-diameter particles that have invaded the CF layer, and to inhibit a decrease in the below-described CAI (compression strength after impact), and thus, is suitable.

In addition, the below-described D90 can also be determined from the average of the diameters of the 900th and 901st particles in ascending order of particle size. The below-described D99 can be determined from the average of the diameters of the 990th and 991st particles in the above-described order.

D99 (here, the unit of D99 is $\mu$m) is preferably equal to or smaller than $0.33 \times A$, more preferably equal to or smaller than $0.30 \times A$, and still more preferably equal to or smaller than $0.27 \times A$, from the viewpoint of processability and from the viewpoint of being able to inhibit a decrease caused in CAI by conductive particles sunk too deeply in the CF layer, wherein A is a value expressed in $g/m^2$, and obtained by rounding the carbon fiber areal weight in the prepreg to the nearest whole number. The lower limit is not particularly limited, but is preferably equal to or greater than $0.20 \times A$, more preferably equal to or greater than $0.23 \times A$. Having D99 within this range makes it possible that the CAI is inhibited from decreasing, and simultaneously that, even in a case where the interlayer thickness varies in a CFRP molding, the variation of the number of conductive particles capable of connecting adjacent CF layers is small, making it easier to obtain stable interlayer conductivity after molding of the prepreg laminate, which is suitable.

In a case where multiple kinds of conductive particles are used, D10, D50, D90 and D99 are values for the whole conductive particles, unless otherwise specified.

Next, a procedure for obtaining the average radius of the CFs is described. In a case where the average radius of CFs is to be determined from a CFRP, the average radius can be measured and calculated through obtaining an observed cross-sectional image of the CFRP. The CFRP is cut in a direction perpendicular to the fiber-axis direction of the CFs embedded in the CFRP to obtain a cross-section. Using a laser microscope (for example, VHX-5000, manufactured by Keyence Corporation), the CF layer (90° layer) perpendicular to the cutting direction of the sample is observed. The diameter of the circle inscribed in the periphery of the cross-section of the CF obtained is determined. From the cross-sectional image, 300 CFs are selected, and the diameters are measured using the above-described method. The arithmetic average is calculated and divided by 2 to give the average radius of the CFs.

In a case where the average radius of the CFs is to be determined from a prepreg, the average radius can be measured and calculated from an observed cross-sectional image of the prepreg. In accordance with the above-mentioned method of obtaining a cross-section from a CFRP, a prepreg is cut with a sharp cutter in the direction perpendicular to the fiber axis of the CF to give a cross-section in the direction perpendicular to the CF. The cross-section is then observed, using a scanning electromicroscope (SEM). The direction in which the average radius of the CFs from the cross-section obtained is calculated is the same as the above-described method of calculating from the cross-section of the CFRP. This method may be used in a case where the resin constituting the prepreg does not flow during the cutting, and where a cross-section in the perpendicular direction can be obtained stably and accurately.

<Coefficient of variation of particle size distribution of conductive particles>

The coefficient of variation of the particle size distribution of the conductive particles in a prepreg according to the present invention is 40% or more. Having a coefficient of variation of 40% or more makes it possible to obtain a CFRP having stable interlayer conductivity even in a case where unevenness is generated in the interlayer thickness in the CFRP molding.

Examples of a method of obtaining conductive particles having such a predetermined particle size distribution include; classifying single conductive particles into a desired range; mixing two or more kinds of conductive particles having different particle size distributions; and, if necessary, mixing and then classifying the particles. Here, in a case where two or more kinds of conductive particles having different particle size distributions are used, the materials for the particles may be the same or different. In a case where a desired particle size distribution of the conductive particles is obtained, the particles are not necessarily classified.

In a case where two or more kinds of conductive particles having different particle size distributions are used, an example of a method of obtaining, in the form of a conductive particle mixture, conductive particles having a particle size distribution having the above-described coefficient of variation is preferably a method in which particles that satisfy the following (Formula 1) are used, wherein particles $\alpha$ and particles $\beta$ are two kinds of particles selected in descending order of blending ratio from all the conductive particles, the particles $\alpha$ have the smaller D50, and the particles $\beta$ have the larger D50.

$$D10 \text{ of particles } \beta < D90 \text{ of particles } \alpha \text{ (Formula 1)}$$

The technical significance of allowing the coefficient of variation of the particle size distribution to be the predetermined value or a greater value is described in detail below. First, increasing the coefficient of variation enables the particle size distribution to become a distribution wider on the smaller-diameter side, to become a distribution wider on the larger-diameter side, or to become a distribution wider on both the smaller-diameter and larger-diameter sides. As described above, conductive particles present between adjacent CF layers in a CFRP electrically connect the adjacent CF layers, thereby generating conductivity between the adjacent CF layers. However, as described above, when the prepreg laminate is formed, the thickness of the interlayer resin layer in the CFRP molding varies with the flow of the matrix resin in some cases. Additionally, in some cases, the interlayer thickness varies owing to factors such as the raw materials and production process of the prepreg in addition to unevenness in the interlayer thickness in the CFRP molding. Owing to these factors, the interlayer thickness can become partly thin or partly thick.

On the other hand, the conductivity between adjacent CF layers can be enhanced by increasing the amount of conductive particles contained in the interlayer resin layer. However, there is naturally an upper limit to securing the mechanical properties of the CFRP. As described below, the amount is preferably 10 mass% or less of the total mass of the epoxy resin composition. In the present invention, using conductive particles having a characteristic particle size distribution makes it possible to provide a prepreg less susceptible to unevenness in the thickness of the interlayer resin layer, even in a case where the amount of conductive particles used is smaller than in a case where conductive particles having no such characteristic particle size distribution are used. Consequently, the present invention can provide a CFRP having excellent lightning protection resistance.

That is, in a case where the mass of the conductive particles contained in the matrix resin in a prepreg is a given mass, the number of particles is in inverse proportion to the cube of the diameter. Accordingly, the smaller the diameter, the greater the number of conductive particles. That is, in a case where a thin part is generated in the interlayer, having the smaller diameter side wider in the particle size distribution of the conductive particles makes it possible to increase the number of conductive particles on the smaller diameter side. The conductive particles on this smaller-diameter side can connect the adjacent CF layers with high frequency in the thinner part of the interlayer. On the other hand, the particle size distribution having the larger diameter side more widely makes it possible that the particles having a larger diameter in a thicker part of the interlayer connect the adjacent CF layers. In addition, the large unevenness in particle size makes it possible to secure the presence probability of conductive particles corresponding to the respective interlayer thicknesses, even if unevenness in the interlayer thickness is large. This makes it possible to minimize the area of a portion where electrical connection is not secured between the layers.

In a case where the coefficient of variation of the particle size distribution of the conductive particles is small, as with the conductive particles preferably used in Patent Literature 1 to 5, the distribution has a region where the frequency of presence of particles significantly varies with the particle size. If the particle size distribution is narrow, the number of conductive particles having a particle size allowing connection between adjacent CF layers tends to vary significantly at positions between the layers in a CFRP molding. In a case where the number of particles that can be arranged in the interlayer in a CFRP is sufficiently large, such a number of particles as to connect the CF layers and exhibit conductivity is secured even if the number of the particles varies at positions in the interlayer. However, the number of particles, if too large, can cause the above-described problems with the mechanical properties and processability. Thus, the number of particles that can be preferably arranged is limited. In a resin composition according to the present invention, the ratio of the amount of the conductive particles is preferably 0.05 mass% or more and 10 mass% or less, more preferably 0.1 mass% or more and 9 mass% or less, and still more preferably 0.5 mass% or more and 8 mass% or less, per 100 mass% of the mass of the epoxy resin composition constituting the matrix resin.

Accordingly, for example, in a case where uneven is caused in the interlayer thickness between the CF layers in the above-described molding of a prepreg laminate, and furthermore where the number of conductive particles capable of connect adjacent CF layers varies greatly, unevenness can be caused in conductivity at positions in the interlayer. In the present invention, having the coefficient of variation of 40% or more, i.e., a wide particle size distribution, makes it possible that, even if the interlayer thickness in a CFRP molding varies, the variation of the number of conductive particles capable of connecting adjacent CF layers is smaller than in the case of using conductive particles having a smaller coefficient of variation of the particle size distribution, thus yielding stable interlayer conductivity in the molding. The coefficient of variation of the particle size distribution is preferably 50% or more and more preferably 55% or more. In addition, the coefficient of variation of the particle size distribution is preferably 100% or less and more preferably 70% or less from a processability viewpoint.

Next, a procedure for obtaining a coefficient of variation of a particle size distribution of conductive particles is described. A face of a prepreg is observed under a laser microscope (for example, a digital microscope VHX-5000, manufactured by Keyence Corporation) at a magnification of 200 times or more. With respect to each of the 1000 particles arbitrarily selected, the diameter of a circle inscribed in a periphery in the image observed is taken as the particle size. The particle size of the conductive particle is determined in micrometers to the second decimal place, and rounded to the nearest first decimal place to give a value to the first decimal place. This is performed on each of 1000 arbitrarily selected particles. However, any particle the inscribed circle of which has a diameter of less than 0.5 $\mu$m is excluded from the measurement. The average size ($\mu$m) and standard deviation ($\mu$m) of the 1000 conductive particles are determined. The average size ($\mu$m) is the arithmetic mean of the particles. The coefficient of variation (%) is determined by dividing the standard deviation ($\mu$m) by the average size ($\mu$m). In a case where a second resin composition film containing conductive particles is available as an observation object, the film may be used as the observation object.

<Kurtosis in particle size distribution of conductive particles>

The kurtosis in the particle size distribution of conductive particles in the present invention is preferably 5.0 or less. The kurtosis is more preferably 4.6 or less and still more preferably 4.0 or less. In a case where the kurtosis is large, the peakedness of the particle size distribution has a strong tendency to be sharp. Accordingly, the distribution has a region where the frequency of presence of particles varies significantly depending on the particle size. Accordingly, in a case where the interlayer thickness varies in a CFRP molding, the interlayer conductivity tends to be uneven. From a processability viewpoint, the kurtosis of the particle size distribution is preferably 1.0 or more.

Next, a preferable procedure for obtaining a kurtosis in a particle size distribution of conductive particles is described. A face of a prepreg is observed under a laser microscope (for example, a digital microscope VHX-5000, manufactured by Keyence Corporation) at a magnification of 200 times or more. With respect to each of the 1000 particles arbitrarily selected, the diameter of a circle inscribed in a periphery in the image observed is taken as the particle size. The particle size of the conductive particle is determined in micrometers to the second decimal place, and rounded to the nearest first decimal place to give a value to the first decimal place. This is performed on each of 1000 arbitrarily selected particles. However, any particle the inscribed circle of which has a diameter of less than 0.5 $\mu$m is excluded from the measurement. With respect to the 1000 particles, the kurtosis of the particle size distribution can be calculated using the following Formula 3. Here, Dj in Formula 3 is the diameter of the j-th particle when the 1000 conductive particles are arranged in ascending order of the particle sizes determined by the above-described method. In addition, Dave is the average value of the particle sizes of the 1000 conductive particles, and is the arithmetic mean of the particle sizes in the same manner as the average diameter ($\mu$m) calculated in the above-described determination of the coefficient of variation of the particle size distribution. In this regard, in a case where a second resin composition film containing conductive particles is available as an observation object, the film may be used as the observation object.

[Math. 1]

$$\text{Kurtosis} = \frac{1000 \sum_{j=1}^{1000}(Dj - Dave)^4}{\left(\sum_{j=1}^{1000}(Dj - Dave)^2\right)^2} \qquad \text{(Formula 3)}$$

<D99/D50 ratio in particle size distribution of conductive particles>

In a particle size distribution of conductive particles used in the present invention, a value (D99/D50) obtained by dividing D99 ($\mu$m) by D50 ($\mu$m) is preferably 1.7 or more. D99/D50 is more preferably 2.0 or more and still more preferably 2.4 or more. This range makes it possible that, even in a case where the thickness of the interlayer resin layer varies in a CFRP molding, the variation of the number of conductive particles capable of connecting adjacent CF layers is small, making it easier to obtain stable interlayer conductivity after molding of the prepreg laminate. From a processability viewpoint and a CAI viewpoint, D99 has a preferable upper limit, and thus, D99/D50 is preferably 8.0 or less. The ratio is more preferably 6.0 or less and still more preferably 4.0 or less.

<Mass ratio of conductive particles having particle size of D50 or more>

The mass ratio of conductive particles having a particle size of D50 or more in the present invention is preferably 70 mass% or more and more preferably 80 mass% or more, assuming that the mass of the whole conductive particles is 100 mass%. Having the mass ratio within this range makes it possible to secure the number of conductive particles that function as a conductive path between adjacent CF layers, and to further decrease unevenness in the conductivity between the CF layers.

The mass ratio of conductive particles having a particle size of D50 or more can be determined using the following procedure. In the same manner as in the above-described procedure for measuring the particle size of conductive particles, the particle sizes of 1000 particles arbitrarily selected are calculated, and the 1000 particles are arranged in ascending order. The particle size divided by 2 is adopted as radius r, and the volume of each particle is calculated in accordance with $4/3 \times \pi \times r^3$. The ratio of the total volume of the 501st to 1000th particles to the total volume of the 1st to 1000th particles is determined to calculate the mass ratio of the conductive particles having a particle size of D50 or more. In this regard, even if two or more different kinds of conductive particles having different specific gravities are used, the mass ratio of the conductive particles having a particle size of D50 or more can be determined, assuming that the different kinds of conductive particles have the same specific gravity.

<Shape of conductive particle>

Conductive particles used in the present invention preferably have a sphericity of 90% or more and more preferably 95% or more. Using conductive particles having high sphericity makes it possible to inhibit the influence of unevenness caused in the major-axis orientation of the particles in the interlayer in a CFRP by the flow of the matrix resin during molding of the prepreg laminate, with the result that the unevenness in the interlayer conductivity is decreased after molding of the prepreg laminate.

A preferable procedure for obtaining sphericity is described below. First, the sphericity of each conductive particle is determined. In the same manner as when the particle size is measured in the above-described procedure for measuring the particle size of a conductive particle, a face of the prepreg is observed, using a laser microscope. Then, the diameters of the circles inscribed in, and the circles circumscribed about, the peripheries of 1000 arbitrarily selected particles are measured. In the same manner as in the measurement of the particle size, any particle the inscribed circle of which has a diameter of less than 0.5 $\mu$m is excluded from the measurement. With respect to each particle, the diameter of the inscribed circle is divided by the diameter of the circumscribed circle, and the result is multiplied by 100 to give the sphericity (%) of each particle. Next, this is performed on 1000 conductive particles, and the sphericity of the particles is defined as the median value of sphericity of the 1000 conductive particles arranged in ascending order of sphericity, i.e., the average value of sphericity of the 500th particle and the sphericity of the 501st particle. Note that, in a case where a second resin composition film is available, the film may be used.

<Presence ratio of conductive particles from face of prepreg to depth of 15%>

With respect to conductive particles to be used in the present invention, it is preferable that S1/S2 is 0.9 or more, in which S1/S2 is an index of the presence ratio of the conductive particles from a face of the prepreg to a depth of 15%, as defined as follows. Here, S1 is the total area of the particles present from a face of the cured prepreg to a depth of 15% along a cross-section of the prepreg, assuming that the total thickness of the prepreg is 100%. S2 is the total area of the particles present throughout the entire thickness of the prepreg. S1/S2 is more preferably 0.95 or more. With such a form, the conductive particles can be stably present in the interlayer after molding of the prepreg into a laminate, resulting in decreasing variation of the number of particles that form a portion serving to electrically connect the upper and lower CF layers. Thus, the resultant molded prepreg laminate can exhibit stable interlayer conductivity.

S1/S2 can be obtained as follows. A prepreg is sandwiched between, and closely attached to, two smooth-faced polytetrafluoroethylene resin plates placed parallel to each other with no pressure applied thereto. The prepreg is heated gradually up to 150°C over a period of 7 days to gelate and cure, producing a plate-like cured product. After being cured, the prepreg is cut in the direction (thickness direction) perpendicular to the closely attached face. The cross-section is polished, and then photographed using a laser microscope (for example, a digital microscope VHX-5000, manufactured by Keyence Corporation) at a magnification of 200 times or more in such a manner that the top and bottom faces of the cured prepreg are within the field of view. The distance between the polytetrafluoroethylene resin plates is measured at five arbitrarily selected points in the horizontal direction (width direction of the prepreg) of the cross-sectional photograph. The average of the values measured is regarded as the average thickness of the cured prepreg. On this photograph of the cured prepreg, two lines parallel to both faces of the cured prepreg are drawn at the positions corresponding to a depth of 15% along the average thickness of the cured prepreg from the faces of the cured prepreg. The total area S1 of all conductive particles present between the faces of the cured prepreg and the respective parallel lines and the total area S2 of all conductive particles present throughout the entire thickness of the cured prepreg are determined. In this regard, the particles on the parallel lines are not included in the measurement of S1. The presence ratio of the particles present within the ranges from the faces of the cured prepreg to a depth of 15% is calculated by dividing S1 by S2. As described above, the cured prepreg is a product cured under very slow conditions, and thus, a value calculated by this calculation is considered to be the presence ratio of the conductive particles present from the faces of the prepreg to a depth of 15%.

<Thermoplastic resin>

In the present invention, the epoxy resin composition as the matrix resin preferably contains a thermoplastic resin. In addition, the thermoplastic resin is preferably compatible with the epoxy resin to be used. An epoxy resin generally has the drawback of being brittle, but still can be molded at low pressure in an autoclave. On the other hand, a thermoplastic resin generally has the advantage of being tough, but is difficult to mold at low pressures in an autoclave. That is, the two kinds of resins exhibit trade-off characteristics. However, using a mixture of these makes it possible to achieve a balance between properties and moldability during low-pressure molding in an autoclave. From the viewpoint of the mechanical properties of a CFRP obtained by curing a prepreg, the thermoplastic resin dissolved in the epoxy resin is preferably contained in an amount of 5 mass% or more and more preferably 10 mass% or more, assuming that the total amount of the epoxy resin composition not including solid mass components such as conductive particles and non-conductive polyamide particles is 100 mass%. The upper limit is preferably 20 mass% or less from a process viewpoint.

In addition, there is a case where such a method of producing a prepreg as described below is used, in which a CF sheet is impregnated, in two steps, with separate epoxy resin compositions: a first resin composition and a second resin composition. For each of the first resin composition and the second resin composition, the blending amount of the thermoplastic resin in such a case is preferably 7 parts by mass or more, more preferably 14 parts by mass or more, and still more preferably 19 parts by mass or more, per 100 parts by mass of the epoxy resin. The upper limit is preferably 30 parts by mass or less from a process viewpoint.

Having the blending amount of the thermoplastic resin within the above-described range makes it possible to inhibit the flow of the matrix resin during the process of molding a prepreg laminate. This consequently makes it easier to obtain a uniform interlayer thickness in a CFRP molding, and can inhibit unevenness in the interlayer conductivity.

Examples of thermoplastic resins that can be suitably used include polymers having, in the principal chain, a bond selected from a carbon-carbon bond, an amide bond, an imide bond, an ester bond, an ether bond, a carbonate bond, a urethane bond, a urea bond, a thioether bond, a sulfone bond, an imidazole bond, and a carbonyl bond. Specific examples include polyacrylate, polyolefin, polyamide (PA), aramid, polyester, polycarbonate (PC), polyphenylenesulfide (PPS), polybenzimidazole (PBI), polyimide (PI), polyetherimide (PEI), polysulfone (PSU), polyethersulfone (PES), polyetherketone (PEK), polyetheretherketone (PEEK), polyetherketone ketone (PEKK), polyaryletherketone (PAEK), and polyamideimide (PAI). Examples of PAEK include polyetherketone (PEK), polyetheretherketone (PEEK), and polyetherketoneketone (PEKK). In fields that require heat resistance, such as aircraft applications, PPS, PES, PI, PEI, PSU, PEEK, PEKK, PAEK, and the like are preferable. In particular, PES is preferable from the viewpoints of mechanical properties and compatibility with an epoxy resin. These may be polymers. Alternatively, oligomers or monomers may be used for the purposes of lower viscosity and low-temperature application. Needless to say, these may be copolymerized depending on the purpose, or various kinds thereof can be mixed to be used as polymer blends or alloys.

<Minimum viscosity of epoxy resin composition>

In the present invention, an epoxy resin composition used as a matrix resin preferably has a minimum viscosity of 0.3 Pa·s or more, as measured under conditions of an angular frequency of 10 rad/s and a temperature ramp rate of 2°C/min. Such an aspect enables the flow of the matrix resin to be inhibited. This consequently makes it easier to obtain a uniform interlayer thickness in a CFRP molding, and can inhibit unevenness in the interlayer conductivity. The minimum viscosity is more preferably 0.6 Pa·s or more and still more preferably 0.8 Pa·s or more. In this regard, the minimum viscosity measured under conditions of an angular frequency of 10 rad/s and a temperature ramp rate of 2°C/min, as used herein, refers to the viscosity at the minimum value on a viscosity curve. This curve is obtained by heating a resin composition using a dynamic viscoelasticity measuring device equipped with parallel plates (for example, ARES, manufactured by TA Instruments, Inc.) at a measurement onset temperature of 40°C, a parallel plate diameter of 40 mm, a parallel plate interval of 1 mm, an angular frequency of 10 rad/s, and a temperature ramp rate of 2°C/minute, and performing a temperature ramp measurement in the auto-strain mode until the storage modulus and the loss modulus become the same value.

<Non-conductive polyamide particles>

It is preferable from a toughness viewpoint that non-conductive polyamide particles are arranged in an interlayer sandwiched between adjacent CF layers. Such polyamide particles are different from the above-described conductive polyamide particles, and are non-conductive (not subjected to any treatment for imparting conductivity). Such non-conductive polyamide particles may be used in combination with the above-described conductive polyamide particles. Non-conductive polyamide particles can enhance the interlayer toughness in a CFRP, and can also further enhance impact resistance such as the below-described CAI, which is important for aircraft applications. Examples of the polyamide that can be suitably used include nylon12, nylon11, nylon6, nylon66, a nylon6/12 copolymer, and a nylon modified into a semi IPN (macromolecular interpenetrating network structure) (semi IPN nylon) by virtue of an epoxy compound described in Example 1 of JPH01-104624A. In order to bring the below-described CAI into a preferable range, the non-conductive polyamide particles are preferably contained in an amount of 4 mass% or more, assuming that the mass of the epoxy resin composition constituting the prepreg is 100 mass%. On the other hand, the amount is preferably 60 mass% or less from a processability viewpoint. In addition, from the viewpoint of ease of controlling, within a suitable range, the below-described coefficient of variation of thickness in one interlayer resin layer in a CFRP, the non-conductive polyamide particles are preferably contained in an amount of 4 mass% or more and 15 mass% or less, more preferably 5 mass% or more and 12 mass% or less, and still more preferably 6 mass% or more and 10 mass% or less, assuming that the mass of the epoxy resin composition constituting the prepreg is 100 mass%. In the below-described molding process under pressure, the polyamide particles more preferably have the properties of a crystal having a melting point equal to or greater than the molding temperature, in order that the polyamide particles will not be crushed but maintain the original particulate shape, thereby making it easier to obtain the intended interlayer thickness.

<Carbon fiber reinforced composite material (CFRP)>

A CFRP according to the present invention can be obtained by laminating two or more sheets of a prepreg according to the present invention, and heat-curing the resultant laminate. For the method of laminating and heat-curing, any of various known methods can be used. For example, a method can be preferably used in which the prepreg obtained is cut to a predetermined size, a predetermined number of the cut prepregs are laminated, and the resultant laminate is heat-cured under pressure.

Examples of a method in which laminated prepregs are heat-cured under pressure include a press forming method, autoclave molding method, bag molding method, wrapping tape method, and internal pressure molding method. Any of these methods is suitably used depending on the application. In particular, an autoclave molding method is often used for aircraft and spacecraft applications because this method provides a CFRP having excellent performance and stable quality.

The temperature at which a CFRP is molded needs to be adjusted depending on the kind of a curing agent contained in the epoxy resin composition. In a case where an aromatic amine compound is used as the curing agent, molding is usually performed at a temperature in the range of from 150 to 220°C. If the molding temperature is too low, sufficient fast curability is achieved in some cases. Conversely, if the molding temperature is too high, warping due to heat strain is more likely to occur in some cases.

The pressure at which a CFRP is molded using an autoclave molding method depends on the thickness of the prepreg, the volume fraction of the reinforcing fiber, and the like, and is usually from 0.1 MPa to 1 MPa. This makes it possible to obtain a CFRP that is free from a defect such as a void, and undergoes little dimensional variation such as warping.

<Coefficient of variation of thickness in one interlayer resin layer in CFRP>

With attention focused on one interlayer resin layer in a CFRP according to the present invention, the coefficient of variation of the thickness of the layer is preferably 26% or more and 45% or less. The coefficient of variation is more preferably 28% or more and 43% or less and still more preferably 30% or more and 40% or less. Having a 26% or more coefficient of variation of thickness in the above-described one interlayer resin layer makes it possible that the interlayer thickness distribution is suitable for the wide particle size distribution of the conductive particles used in the present invention, and that more conductive particles present between the CF layers, and ranging from the large-diameter side to the small-diameter side electrically connect the upper and lower CF layers. As a result, even if the interlayer thickness varies slightly in a CFRP molding, the variation of the number of conductive particles capable of connecting adjacent CF layers can be decreased, resulting in achieving stable interlayer conductivity. In addition, the above-described range makes it possible to exhibit high CAI, and thus, is suitable. Here, the conductive particles present in one interlayer function as a spacer that, in the interlayer, comes in contact with the upper and lower CF layers, and thus, the thickness of the interlayer resin layer varies. Accordingly, the coefficient of variation of thickness in one interlayer resin layer is affected mainly by the particle size and particle size distribution of the conductive particles. However, it is possible that the coefficient is affected by solid particles arranged in the interlayer, and including the above-described non-conductive polyamide particles. The coefficient of variation can fall within a suitable range, depending on the following: the particle size distribution, D50, and D99 of the conductive particles used in the present invention; and the mass ratio of the non-conductive polyamide particles in the epoxy resin composition contained in the prepreg.

In addition, for a CFRP according to the present invention, it is preferable that interlayer resin layers each having a coefficient of variation of thickness of 26% or more and 45% or less, preferably 28% or more and 43% or less, and more preferably 30% or more and 40% or less account for 50% or more, preferably 70% or more, of the total number of interlayer resin layers. Most preferably, all the interlayer resin layers satisfy this.

Here, the coefficient of variation of thickness in one interlayer resin layer in the CFRP can be obtained as follows. A CFRP according to the present invention is cut so as to give a cross-section perpendicular to the fiber axis of the carbon fiber in the 0° layer. The cross-section is polished, and then, photographed using an optical microscope at a magnification of 500 times so that the boundary region of the interlayer resin layer between adjacent CF layers can be observed. In each of the layers in the resultant photograph, 20 regions (20 photographs) are arbitrarily selected in the in-plane direction in such a manner that the regions photographed do not overlap with one another. In each cross-sectional photograph, the thickness of the interlayer resin layer arranged between adjacent CF layers (the thickness is the distance between the CF layers in the thickness direction of the CFRP at each measurement point) is read out at 100 points at 5 $\mu$m intervals in the longitudinal direction of each interlayer. The average thickness ($\mu$m) and standard deviation ($\mu$m) of the interlayer resin layer are determined from a total of 2000 readings. The average thickness ($\mu$m) of the interlayer resin layer is the arithmetic mean of the thicknesses of the interlayer resin layer at the measurement points. The standard deviation ($\mu$m) is divided by the average thickness ($\mu$m) to determine the coefficient of variation (%) of thickness of the interlayer resin layer as a measuring object.

In addition, it is preferable for a prepreg according to the present invention that a coefficient of variation of thickness in one interlayer resin layer in a CFRP is 26% or more and 45% or less, wherein the CFRP is obtained by pseudo-isotropically laminating the prepreg in a 16-ply form having a [+45°/0°/-45°/90°]2s constitution, and curing the resultant prepreg under heat and pressure under conditions of a temperature of 180°C, a pressure of 0.6 MPa, and a temperature ramp rate of 1.7°C/minute for 2 hours, using an autoclave. Using such a prepreg makes it possible that the distribution of the interlayer thickness becomes suitable for the particle size distribution of the conductive particles used in the present invention, that the variation of the number of conductive particles capable of connecting adjacent CF layers is decreased, and that stable interlayer conductivity is achieved.

<Interlayer conductivity between adjacent CF layers in CFRP>

The conductivity in the interlayer (interlayer resin layer) between adjacent CF layers can be measured using the following method. A cuboid test piece is cut out of a CFRP. In this case, the thickness direction of the laminated prepreg is regarded as the z-axis, and the directions parallel to the two sides other than the thickness direction of the cuboid are regarded as the x-axis and the y-axis. The area S3 (m$^2$) of the x-y plane of the test piece is calculated by multiplying the lengths of the sides of the test piece in the x-axis and y-axis directions. The faces of the test piece, parallel to the x-y plane, are polished until the CF layer is exposed on the faces. Next, four faces other than the polished faces are masked, platinum metal is vapor-deposited on the polished faces to form electrodes, and the masking is removed to obtain a sample for evaluating conductivity. Next, one face is arbitrarily selected from the masked faces (for convenience, this face is referred to as the "voltage measurement surface"), and the sample is placed on the moving stage with this face facing upward. A digital multimeter (for example, an R6451A digital multimeter manufactured by Advantest Corporation) is connected to the platinum electrodes of the test piece placed. A voltage is applied across the platinum electrodes so as to yield a constant current density (the current value is referred to as Ia). On the other hand, a voltmeter is provided (the digital multimeter may be used). One of the terminals is connected to one of the platinum electrodes (referred to as the "base electrode" for convenience), and the other is used as a probe (micromanipulator probe). The probe is allowed to scan in the direction from the base electrode side of the voltage measurement surface up to the other platinum electrode. The relationship between the scanned distance and the voltage across the probe and base electrode is plotted. From the resultant graph, the sections corresponding to the CF layers and the sections corresponding to the interlayer resin layers are identified. With respect to each of the sections corresponding to the interlayer resin layers, determinations are made of the thickness (scanned length) of the interlayer resin layer and the absolute value of the difference (referred to as the "amount of voltage change" for convenience) between the voltage measured when the probe enters the interlayer resin layer and the voltage measured when the probe exits the interlayer resin layer. The interlayer conductivity in a CFRP is determined using the following formula.

Interlayer conductivity (S/m) in CFRP = {(total sum (m) of thicknesses of interlayer resin layers scanned) $\times$ Ia (A)} / {(total sum (V) of amounts of voltage change of interlayer resin layers scanned) $\times$ S3 (m$^2$)}

This measurement is performed five times, changing the position of the probe each time. The arithmetic mean of the measured values of interlayer conductivity of the CFRP is adopted as the final interlayer conductivity of the CFRP.

Here, the probe is set to scan in such a manner that the five scanning lines and the sides parallel to the z-axis of the voltage measurement surface are equally spaced. In addition, the sections corresponding to the CF layers and the sections corresponding to the interlayer resin layers are identified by observation, if possible. If the observation is difficult, the identification is performed using the inflection point in the plot of the relationship between the scanned distance and the voltage across the probe and the base electrode.

In a case where a prepreg according to the present invention is laminated and molded into a CFRP, the interlayer conductivity (in an interlayer resin layer) between adjacent CF layers in the CFRP is preferably 0.1 S/m or more because of the possibility of being capable of simplifying a lightning protection system in an aircraft. Such interlayer conductivity between CF layers is more preferably 1.0 S/m or more and still more preferably 1.6 S/m or more. On the other hand, if an attempt is made to make the interlayer conductivity between adjacent CF layers very high, the production process can become complicated, the cost can become very high, and thus, the conductivity is preferably 1000 S/m or less in reality.

<CAI (compression strength after impact)>

CAI (Compression strength after impact) is an important index of impact resistance in aircraft applications. A CFRP according to the present invention preferably has a compression strength after impact of 230 MPa or more after being subjected to an impact of 6.7 J/mm. Having a CAI of 230 MPa or more enables the CFRP to maintain strength even after being subjected to a weak impact such as due to a tool dropped or a pebble bounced up, and thus, is preferable. The CAI is more preferably 250 MPa or more and still more preferably 270 MPa or more. On the other hand, if an attempt is made to make the CAI very large, the production process can become complicated, and the cost can become very high. Thus, the CAI is preferably 400 MPa or less in reality.

<Structure>

A CFRP obtained using the present invention can be suitably used for an aircraft structure. Examples of an aircraft structure include a shaped structure selected from flat-plate structures, cylindrical structures, box-shaped structures, C-shaped structures, H-shaped structures, L-shaped structures, T-shaped structures, I-shaped structures, Z-shaped structures, and hat-shaped structures. These structures are combined to constitute a part of an aircraft. These structures having the above-described shapes are described in detail, for example, in Torikai and Kuze, "Structural Design of Aircraft", 5th Edition, Japan Aeronautical Engineering Association (2003). Such a structure can be obtained by shaping a prepreg as described, for example, in WO2017/110991 (paragraph [0084]), WO2016/043156 (paragraph [0073]), and WO2019/0314078 (paragraph [0088]). In addition, a structure having a desired shape can be obtained by automatically laminating a prepreg tape onto a mold having the desired shape, and then curing the resultant prepreg.

In a case where an aircraft is produced, the fuselage, main wings, center wings, tail wings, and the like are formed from a joined structure in which a plurality of the above-described structures are joined together. As means for joining the structures, what is called a fastener such as a bolt and a rivet, an adhesive film, and the like are used. In addition, a co-curing method can be used in which a plurality of uncured or semi-cured prepreg laminates are joined together, and then cured.

Next, an example of a method of obtaining a prepreg according to the present invention is described in detail. In light of using a prepreg according to the present invention as a structural material for an aircraft, a CF sheet to be used is preferably a UD sheet. Obviously, a CF fabric can also be used for a cover prepreg to be attached to a face of a prepreg for a structural material, and used for a CFRP having a complicated shape. As an example, a UD prepreg formed using a matrix resin mainly composed of a thermosetting resin is described below. In this regard, the present invention is not to be construed to be limited to such examples.

In the present invention, it is preferable to use a two-step impregnation method in which resin impregnation is performed twice in order to form an orderly interlayer structure in a resultant CFRP, and to control the number of conductive particles serving to connect the adjacent CF layers. First, for a prepreg intermediate material to be obtained in the first-step impregnation (hereinafter simply referred to as a "prepreg intermediate material" in some cases), a first resin composition is prepared by kneading a combination of an epoxy resin, a curing agent, and a thermoplastic resin. Using this first resin composition, a first resin composition film is produced with a roll coater. The CF bundles are then arranged to form a UD sheet, to which the first resin composition film is applied from above and below. After being preheated, the resultant material is pressed using nip rolls. The UD sheet is thus impregnated with the first resin composition to yield a prepreg intermediate material. In this impregnation, the degree of impregnation of the resin in the prepreg intermediate material is preferably high.

Next, to perform the second-step impregnation, a second resin composition is prepared by further adding non-conductive polyamide particles and conductive particles to an epoxy resin, a curing agent, and a thermoplastic resin. A second resin composition film is produced using a roll coater.

Then, the second resin composition film is applied to both the top and bottom faces of the prepreg intermediate material. After being preheated, the resultant material is pressed using nip rolls to be laminated. In this process, it is desirable to perform sufficient preheating to secure sufficient flowability of the second resin composition. Then, wound up on a winding machine, the prepreg is obtained. In the prepreg obtained using such a production method, the particles can be unevenly distributed in the face in a case where the D50 of the particles is equal to or greater than the average radius of the fibers.

In this regard, in a case where a CF sheet is impregnated in two steps with separate epoxy resin compositions: a first resin composition and a second resin composition, the second resin composition only needs to contain at least an epoxy resin, a curing agent, and conductive particles. For example, the first resin composition optionally does not contain conductive particles. In an aspect in which the first resin composition does not contain conductive particles, the prepreg considered as a whole enables the efficiency of utilization of the conductive particles to be enhanced, or enables the amount of use of conductive particles to be controlled. This embodiment is advantageous from the viewpoints of lightning protection resistance and mechanical properties of a resultant CFRP. In addition, for both the first resin composition and the second resin composition, it is appropriate that a thermoplastic resin can be optionally used depending on the desired characteristics.

Examples

Below, the present invention is described in detail with reference to Examples. However, the present invention is not construed to be limited to these Examples. In this regard, the unit of compositional ratio, "part(s)", means part(s) by mass, unless otherwise specified. In addition, various characteristics (properties) were measured in an environment of a temperature of 23°C and a relative humidity of 50%, unless otherwise specified.

<Raw materials>

(1) Carbon fiber (CF)

CFs having a single-fiber diameter of 7 $\mu$m, containing 24,000 filaments/bundle and having a tensile strength of 5.8 GPa and a tensile modulus of 280 GPa were provided.

(2) Epoxy Resin

- "SUMIEPOXY" ELM434 (tetraglycidyldiaminodiphenylmethane, manufactured by Sumitomo Chemical Co., Ltd.)
- "EPICLON (registered trademark)" 830 (bisphenol F type epoxy resin, manufactured by DIC Corp.)
- "GOT (registered trademark)" (glycidylaniline type epoxy resin (N,N-diglycidyl-o-toluidine), manufactured by Nippon Kayaku Co., Ltd.) (3) Curing agent
- SEIKACURE-S (4,4'-DDS, manufactured by Seika Corporation) (4) Thermoplastic resin (PES)
- "SUMIKAEXCEL (registered trademark)" 5003P (PES, manufactured by Sumitomo Chemical Co., Ltd.)

(5) Non-conductive polyamide particles

With reference to WO2018/207728, 200 g of $\epsilon$-caprolactam (manufactured by Toray Industries, Inc.), 800 g of polyethylene glycol (primary polyethylene glycol 20,000; the mass-average molecular weight, 18,600; manufactured by Fujifilm Wako Pure Chemical Corporation), and 1,000 g of water were added to an autoclave having a capacity of 3 L, and equipped with an agitating blade of a helical ribbon type, so that a uniform solution was formed. Then, the autoclave was sealed and purged with nitrogen. Then, the stirring rate of the agitating blade was set to 100 rpm, and the temperature was raised to 240°C. When this was performed, the pressure of the system reached 1 MPa, and then controlled by slightly releasing the water vapor pressure so as to maintain the pressure at 1 MPa. The temperature reached 240°C, and then, the pressure was released at a rate of 0.02 MPa/minute. Then, with nitrogen flowing through, the temperature was maintained for 1 hour to complete polymerization. The solution was discharged into 2,000 g of water in a bath to yield slurry. The unreacted components were dissolved in the water in the water bath, and then filtrated. To the residue, 2,000 g of water was added, and the resultant mixture was washed at 80°C. The slurry washed was filtrated through a 200 µm sieve to remove aggregates. The filtrate from which the aggregates had been removed was again filtrated to isolate the residue, which was dried at 80°C for 12 hours to produce 140 g of polyamide 6 powder. The melting point of the powder obtained was 218°C, the same as the melting point of polyamide 6. The crystallization temperature was 170°C.

(6) Conductive particles (Note: "conductive particles" is omitted in the particle name in Tables):

- Conductive particles A: obtained as follows: two kinds of phenol resin particles (Marilin HF type, manufactured by Gunei Chemical Industry Co., Ltd.) having different particle size distributions were mixed, baked at 2000°C, and classified (the component: carbon; D50, 20.3 µm; D99, 64.4 µm; and the coefficient of variation of particle size distribution, 62%). The volume resistivity of the conductive particles A was calculated using the below-described method, and was found to be 0.05 Ωcm. The below-described conductive particles B, C, E, F, and G also exhibited the same volume resistivity as the conductive particles A.
- Conductive particles B, E, F, and G: obtained in the same manner as the conductive particles A except that the particles were classified under different conditions, and had the physical properties and characteristics shown in Table 2.
- Conductive particles C: obtained by classifying "GLASSY CARBON (registered trademark)" (the component: carbon; manufactured by Tokai Carbon Co., Ltd.) Table 2 shows the properties and characteristics.
- Conductive particles D: obtained as follows: two kinds of phenol resin particles (Marilin HF type, manufactured by Gunei Chemical Industry Co., Ltd.) different in kind from the example of the conductive particles A, and having different particle size distributions were mixed, baked at 2000°C, and classified (the component: carbon; D50, 27.6 µm; D99, 66.4 µm; the coefficient of variation of particle size distribution, 54%). The volume resistivity of the conductive particles D was calculated using the below-described method, and was found to be 0.05 Ωcm.
- Conductive particles H: obtained as follows: 100 g of the non-conductive polyamide particles obtained in (5) were added to 1000 ml of an electroless nickel plating solution NICKEL BOOMER LP-26LL (manufactured by Nihon Kagaku Sangyo Co., Ltd.), and a plating treatment was performed at 50°C for 60 minutes; and the resultant particles were classified to produce the conductive particles H. The volume resistivity of the conductive particles H was calculated using the below-described method, and was found to be 0.01 Ωcm. Table 2 shows the characteristics of the particles before plating (there is substantially no variation before and after the plating).
- Conductive particles I, J, and K: obtained in the same manner as the conductive particles D except that the particles were classified under different conditions, and had the physical properties and characteristics shown in Table 2.

<Methods of evaluation>

(1) Preparation of epoxy resin composition

An epoxy resin and a thermoplastic resin (PES) were kneaded. The resultant mixture was heated to 150°C or more, and stirred for 1 hour, without further additions, to dissolve the PES in the epoxy resin. A transparent viscous liquid was thus obtained. This liquid was cooled while being kneaded. Then, a curing agent was added, and the resultant mixture was further kneaded to yield a first resin composition.

In addition, the same transparent viscous liquid as described above was prepared separately, and cooled while being kneaded. Then, a curing agent, non-conductive polyamide particles, and conductive particles were added. The resulting mixture was kneaded to yield a second resin composition.

The compositional ratios of the epoxy resin compositions used in Examples and Comparative Examples are shown in Table 1, Table 3, Table 4, Table 6, Table 7, and Table 8 (the units in each Table are part(s) by mass).

(2) Production of prepreg

From the epoxy resin composition prepared in (1) above, a prepreg was produced using the two-step impregnation method, as follows. A roll coater equipped with parallel-arranged rolls was used at a winding rate of 15 m/minute to uniformly apply each of the first resin composition and the second resin composition, which were produced in (1) above, to release paper coated with silicone, to form a first resin composition film and a second resin composition film respectively. Then, CFs arranged uniformly in one direction were sandwiched between two first resin composition films, and heated and pressed using a press roll to yield a prepreg intermediate material in which the CFs were sufficiently impregnated with the first resin composition (the CF areal weight, 268 g/m$^2$; the resin content, 20 mass%). Next, both sheets of release paper were peeled off from the prepreg intermediate material. Next, the prepreg intermediate material was sandwiched between two second resin composition films, and heated and pressed using a press roll to yield a prepreg in which the prepreg intermediate material was impregnated with the second resin composition (the CF areal weight, 268 g/m$^2$; the resin content (Rc), 34 mass%).

(3) Measurement of resin content (hereinafter abbreviated as "Rc") of prepreg

The Rc was measured according to the experimental method for "Prepreg mass per unit area, carbon fiber mass per unit area, resin mass content, and fiber mass content" described in JIS K7071 (1988). Specifically, a test piece 100 mm long and 100 mm wide was cut out from the sample prepreg obtained in each of Examples and Comparative Examples, and the mass was measured. Next, at a temperature of 23°C, the test piece was placed in a beaker, and about 200 ml of methylethyl ketone (MEK) was added. After ultrasonic irradiation for 15 minutes with stirring, the CFs were collected using tweezers, and placed in another beaker. The CFs collected were subjected to the same washing operation as described above another two times. After the washing operation was completed three times in total, the CFs were transferred to a glass filter the mass of which had been measured in advance. The CFs were subjected to suction filtration. After the suction filtration, the CFs together with the glass filter were dried in a dryer at a temperature of 105°C for 90 minutes, and then cooled in a desiccator for 45 minutes or more. Then, the mass of the glass filter with the CFs still thereon was measured, and the mass of the glass filter that had been measured in advance was subtracted to give the mass of the CFs. Next, the mass of the resin was determined by subtracting the mass of the CFs from the mass of the prepreg measured initially. The Rc was calculated by dividing this mass of the resin by the mass of the prepreg. The measurement was made three times, and the average value was adopted as the Rc of the prepreg. In addition, the same measurement was made on the prepreg intermediate material.

(4) Minimum viscosity of epoxy resin composition

Resin compositions having the same area were taken from the first resin composition film and the second resin composition film respectively that were used in the production of the prepreg in (2). The resin compositions were mixed to provide an epoxy resin composition. On the epoxy resin composition, a temperature ramp measurement was performed in the auto-strain mode, using a dynamic viscoelasticity measuring device (ARES, manufactured by TA Instruments, Inc.) at a measurement onset temperature of 40°C, a parallel plate diameter of 40 mm, a parallel plate interval of 1 mm, an angular frequency of 10 rad/s, and a temperature ramp rate of 2°C/minute, until the storage modulus and the loss modulus became the same value. From the viscosity curve obtained, the lowest viscosity value was taken as the minimum viscosity of the epoxy resin composition.

(5) Measurement of particle size of conductive particles; coefficient of variation; kurtosis; D50; and D99

The second resin composition film was observed using a laser microscope (a digital microscope VHX-5000, manufactured by Keyence Corporation, hereinafter referred to as VHX-5000) at a magnification of 200 times or more. With respect to 1000 particles selected arbitrarily (primary particles), the diameter of the circle inscribed in the periphery of each particle in the observed image was measured as the particle size. However, any particle the inscribed circle of which had a diameter of less than 0.5 μm was excluded from the measurement. The particle size was determined in micrometers to the second decimal place, and rounded to the nearest first decimal place to give a value to the first decimal place. The average size (μm) and standard deviation (μm) of the 1000 conductive particles were determined. The coefficient of variation (%) was determined by dividing the standard deviation (μm) by the average size (μm). On the basis of the particle sizes of the 1000 particles, the kurtosis was calculated using the following Formula 3. In this regard, the above-described average size (μm) is the arithmetic mean of the particle sizes of the 1000 particles, and also corresponds to Dave in Formula 3. Additionally, the particle sizes of the 1000 particles were arranged in ascending order. The average of the sizes of the 500th and 501st particles was regarded as D50 (μm), and the average of the sizes of the 990th and 991st particles was regarded as D99 (μm).

(6) Volume resistivity of conductive particles

Using an MCP-PD51 powder resistivity analyzer (manufactured by Nittoseiko Analytech Co., Ltd.), conductive particles were set as a sample in a cylindrical cell having four-point probe electrodes. The thickness and resistance of the sample were measured with a pressure of 60 MPa applied to the sample, and the volume resistivity was calculated.

(7) Sphericity of conductive particles

The second resin composition film was observed using VHX-5000 at a magnification of 200 times or more. With respect to 1000 particles (primary particles) selected arbitrarily, the diameter of the circle inscribed in, and the diameter of the circle circumscribed about, a periphery in the image observed were measured. However, any particle the inscribed circle of which had a diameter of less than 0.5 $\mu$m was excluded from the measurement. The diameter of the inscribed circle was divided by the diameter of the circumscribed circle, and the result was multiplied by 100 to give the sphericity (%) of each particle. The median value of the sphericity of the 1000 conductive particles, i.e., the average value of the sphericity of the 500th particle and the sphericity of the 501st particle when the conductive particles are arranged in ascending order of sphericity, was adopted as the sphericity of the conductive particles.

(8) Presence ratio of conductive particles from face of prepreg to depth of 15%

A prepreg produced in (2) above was sandwiched between, and closely attached to, two smooth-faced polytetrafluoroethylene resin plates placed in parallel with no pressure applied thereto. The prepreg was heated gradually up to 150°C over a period of 7 days to gelate and cure, producing a plate-like cured product. After being cured, the prepreg was cut in the direction (thickness direction) perpendicular to the closely attached face. The cross-section was polished, and then photographed using VHX-5000 at a magnification of 200 times or more in such a manner that the top and bottom faces of the cured prepreg were within the field of view. The distance between the polytetrafluoroethylene resin plates was measured at five arbitrarily selected points in the horizontal direction (width direction of the cured prepreg) of the cross-sectional photograph. The average of the values measured was regarded as the average thickness of the cured prepreg. On this photograph, two lines parallel to both faces of the cured prepreg were drawn at the positions corresponding to a depth of 15% of the average thickness of the prepreg from the faces of the cured prepreg. The total area S1 of all the conductive particles present between the faces of the cured prepreg and the respective parallel lines and the total area S2 of all the conductive particles present throughout the entire thickness of the cured prepreg were determined. By dividing S1 by S2, the presence ratio of conductive particles from the face of the prepreg to a depth of 15% was calculated.

(9) Measurement of interlayer conductivity between CF layers

Assuming that the longitudinal direction of the CFs contained in the prepreg produced in (2) was 0°, the CF layers were laminated so as to have the [+45°/0°/-45°/90°]2s constitution. The resultant laminate was regarded as a totally 16-ply pseudo-isotropic, preliminary laminate. The preliminary laminate obtained was set in an autoclave, heated from room temperature to 180°C at a rate of 1.7°C per minute under a pressure of 0.6 MPa, and cured at 180°C for 2 hours to yield a CFRP of 350 mm wide and 350 mm deep. With the center of gravity kept constant, the four sides were cut off to yield a CFRP in the form of a cuboid of 300 mm wide and 300 mm deep (a in FIG. 1). In addition, from the prepreg produced in (3), a CFRP in the form of a cuboid of 300 mm wide and 300 mm deep was obtained in the same manner.

With respect to each of the CFRP panels obtained, four 8 mm long $\times$ 8 mm wide cuboids (c in FIG. 1) similar to the external shape of the CFRP panel were cut out (test piece A), in which the intersection of the lines (b and b' in FIG. 1) each connecting the midpoints of opposite sides is regarded as one of the vertices of each cuboid. In addition, four cuboids of 8 mm long $\times$ 8 mm wide (d in FIG. 1) similar to the external shape of the CFRP panel were cut out (test piece B), in which each corner of the CFRP panel is regarded as one of the vertices of each cuboid. With respect to each of the cut-out test piece A and test piece B, the cross-section having the right side of the two sides parallel to the line b in the positional relationship shown in FIG. 1 was used as the measurement face for the interlayer conductivity (voltage measurement surface). Both edges of each test piece in the thickness direction were polished to remove the resin on the face, and expose the CF layer. After masking the four cross-sections other than the polished faces, and including the measurement face, platinum was vapor-deposited on both polished faces to form electrodes, and the masking was removed to yield a sample for evaluating conductivity. Then, the sample was placed on a moving stage with the voltage measurement surface facing upward. A digital multimeter (an R6451A digital multimeter, manufactured by Advantest Corporation) was connected to the platinum electrodes of the test piece placed, and a voltage was applied across the platinum electrodes so as to achieve a constant current density (current value: Ia). On the other hand, a voltmeter was used (the digital multimeter was used) with one terminal connected to one of the platinum electrodes (base electrodes) and the other terminal used as a probe (micromanipulator probe). The probe was allowed to scan in the direction from the base electrode side of the voltage measurement surface up to the other platinum electrode. The relationship between the scanned distance and the voltage across the probe and base electrode was plotted. From the resultant graph, the sections corresponding to the CF layers and the sections corresponding to the interlayer resin layers were identified. With respect to each of the sections corresponding to the interlayer resin layers, determinations were made of the thickness (scanned length) of the interlayer resin layer and the absolute value of the difference (the amount of voltage change) between the voltage measured when the probe enters the interlayer resin layer and the voltage measured when the probe exits the interlayer resin layer. The interlayer conductivity between layers in a CFRP was determined using the following formula.

Interlayer conductivity (S/m) in CFRP = {(total sum (m) of thicknesses of interlayer resin layers scanned) $\times$ Ia (A)} / {(total sum (V) of amounts of voltage change of interlayer resin layers scanned) $\times$ S3 (m$^2$)}

Here, S3 is the cross-sectional area of the test piece, which is $64 \times 10^{-6}$ (m$^2$).

This measurement was performed five times, changing the position of the probe each time. The arithmetic mean of the measured values of interlayer conductivity of the CFRP was adopted as the final interlayer conductivity of the CFRP.

Here, the probe was set to scan in such a manner that the scanning lines and the sides parallel to the voltage measurement surface in the thickness direction of the sample were equally spaced. In addition, the sections corresponding to the CF layers and the sections corresponding to the interlayer resin layers were identified using the inflection point in the curve obtained by plotting the relationship between the scanned distance and the voltage across the probe and the base electrode

The same measurements as described above were performed on all four test pieces A. The arithmetic average of the measurement results was adopted as the interlayer conductivity (Pcc (S/m)) of the CFRP at the center of the panel. In addition, the same measurements as on test pieces A were performed on all four test pieces B. The arithmetic average of the measurement results was adopted as the interlayer conductivity (Ptc (S/m)) in the CFRP at the edge portion of the panel.

(10) Rating for unevenness in interlayer conductivity

With respect to the interlayer conductivity obtained in (9), the conductivity variation ratio in the CFRP molding was determined from the Pcc and the Ptc in accordance with Formula 4. As this value, 25% or less was rated as excellent; more than 25% and 35% or less was rated as good; more than 35% and 50% or less was rated as possible; and greater than 50% was rated as unacceptable; and the excellent, good, and possible values were rated as acceptable.

$$\text{Conductivity variation ratio (\%)} = |\text{Ptc} - \text{Pcc}| / (\text{average of Ptc and Pcc}) \times 100:$$

$$(\text{Formula 4})$$

(11) Coefficient of variation of thickness n one interlayer resin layer

A 300 mm wide $\times$ 300 mm long square CFRP was produced in the same manner as in (9). Two test pieces line-symmetric to b' in FIG. 1 were arbitrarily selected from the four test pieces (c in FIG. 1) in the center of the CFRP panel. The cross-section having the side corresponding to b in FIG. 1 was polished, and then magnified 500 times under an optical microscope, from which cross-sectional photographs were obtained arbitrarily in such a manner that the photographed areas did not overlap, and that the interlayer between the 7th ply and the 8th ply in the thickness direction of the panel was observable. The photographs corresponded to a total of 20 areas (20 photographs), 10 areas per test piece. In each of the cross-sectional photographs obtained, the thickness of the interlayer resin layer between adjacent CF layers (the thickness is the distance between the CF layers in the thickness direction of the CFRP at each measurement point between the layers) was read at 100 points at 5 $\mu$m intervals along the side corresponding to b in FIG. 1. The average thickness ($\mu$m) and standard deviation ($\mu$m) of the interlayer resin layer were determined from a total of 2000 readings. The average thickness ($\mu$m) of the interlayer resin layer was determined as the arithmetic mean of the thicknesses of the interlayer resin layers. The coefficient of variation (%) was calculated by dividing the standard deviation ($\mu$m) by the average thickness ($\mu$m) of the interlayer resin layer.

(12) CAI (compression strength after impact of CFRP)

A CFRP was produced by pseudo-isotropically laminating, in 16-ply form, the prepreg produced in (2), to have a [+45°/0°/-45°/90°]2s constitution, and molding the layered sheets in an autoclave at a temperature of 180°C, a pressure of 0.6 MPa, and a temperature ramp rate of 1.7°C/minute for 2 hours. A 150 mm long $\times$ 100 mm wide sample was cut out from this CFRP. A drop impact of 6.7 J/mm was applied to the center of the sample in accordance with SACMA SRM 2R-94. Then, the sample underwent a compression failure test, by which the compression strength after impact (CAI) was determined.

(13) Average radius of CF

A CFRP was produced by pseudo-isotropically laminating, in 16-ply form, the prepreg produced in (2), to have a [+45°/0°/-45°/90°]2s constitution, and molding the layered sheets in an autoclave at a temperature of 180°C, a pressure of 0.6 MPa, and a temperature ramp rate of 1.7°C/minute for 2 hours. The CFRP sample obtained was cut parallel to the 0° direction to give a cross-section. Using the VHX-5000, a CF layer (i.e., a 90° layer) in which the CFs extended perpendicular to the cross-section was observed. From the cross-section obtained, the diameter of a circle inscribed in the periphery of a single CF was calculated. From the cross-sectional image, 300 single CFs were selected, and the diameters of the inscribed circles were measured. The arithmetic average was calculated, and divided by 2 to give the average radius of the CFs.

(14) Mass ratio of non-conductive polyamide particles in epoxy resin composition

With respect to the first resin composition film and second resin composition film used to produce the prepreg in (2), the mass (g) of a 100 mm square (100 mm$^2$) film was measured, and the areal weight of the resin per m$^2$ (g/m$^2$) was thus calculated. By multiplying the areal weight of the resin of the second resin composition film by the blending ratio of the non-conductive polyamide particles in the second resin composition in each of Table 1, Table 3, Table 4, Table 6, Table 7, and Table 8, the areal weight (g/m$^2$) of the non-conductive polyamide particles per m$^2$ of the second resin composition film was calculated. The mass ratio of the non-conductive polyamide particles in the epoxy resin composition constituting the prepreg was calculated by dividing this areal weight of the non-conductive polyamide particles by the sum of the areal weight of the first resin composition film and the areal weight of the second resin composition film that were determined above.

(Example 1)

An epoxy resin composition was prepared in accordance with the composition shown in Table 1, using the methods in (1) and (2) in <Methods of evaluation> above. Then, a prepreg was produced and evaluated. The conductive particles used were the conductive particles A, the D50 of which was sufficiently large with respect to the 3.5 μm average radius of the CFs. The coefficient of variation of the particle size distribution of the conductive particles was 62%, which was sufficiently large. In addition, the minimum viscosity of the epoxy resin composition was 0.9 Pa·s.

When the interlayer conductivity was measured using the method in (9) in <Methods of evaluation>, the conductivity Pcc was slightly lower than the conductivity Ptc, but both were still very high. This decrease in the interlayer conductivity was conceivably because the matrix resin flowed during molding of a prepreg laminate, causing the interlayer to become thicker at the center of the panel than at the edge of the panel, and thus decreasing the number of conductive particles serving to connect the CF layers. However, the ratio of variation of conductivity, as calculated by Formula 4 in (10) in <Methods of evaluation>, and indicative of unevenness in the interlayer conductivity, was 16%, which is very small. This is considered to be due to the fact that the coefficient of variation of the particle size distribution of the conductive particles was large, and hence, the variation of the number of the conductive particles serving to connect the CF layers in the CFRP molding was small. The CAI was also very high for a primary structural material for an aircraft.

(Comparative Example 1)

Preparation of an epoxy resin composition, production of a prepreg, and evaluation were performed in the same manner as in Example 1 except that the conductive particles used were conductive particles B as shown in Table 2. The conductive particles B had a very small coefficient of variation of the particle size distribution of the conductive particles.

When the interlayer conductivity was measured in the same manner as in Example 1, the edge of the panel exhibited a very high interlayer conductivity, which was higher than in Example 1, but the center of the panel exhibited a significantly decreased interlayer conductivity, which was lower than in Example 1. This was conceivably because the flow of the matrix resin during molding of a prepreg laminate caused the center of the panel to become relatively thicker than the edge of the panel, thus decreasing the number of conductive particles serving to connect the CF layers in the center of the panel.

This is considered to be due to the fact that the coefficient of variation of the particle size distribution of the conductive particles B was small, and thus, the number of the conductive particles serving to connect the CF layers varied significantly in a portion having a variation of the interlayer thickness in the CFRP molding.

(Example 2)

Production of a resin film and a prepreg and evaluation were performed in the same manner as in Example 1 except that the conductive particles used were conductive particles C as shown in Table 2. The unevenness in the interlayer conductivity was very small. The interlayer conductivity was very high. The CAI was very high for a primary structural material for an aircraft.

(Comparative Example 2)

Preparation of an epoxy resin composition, production of a prepreg, and evaluation were performed in the same manner as in Example 1 except that the conductive particles used were conductive particles E as shown in Table 2. The coefficient of variation of the particle size distribution of the conductive particles E was 28%, which was not sufficiently large, though larger than the coefficient of the conductive particles B. Thus, the difference in interlayer conductivity between the center and edge of the panel was large in the same manner as in Comparative Example 1.

(Example 3)

Preparation of an epoxy resin composition, production of a prepreg, and evaluation were performed in the same manner as in Example 1 except that the conductive particles used were conductive particles F as shown in Table 2. As in Example 1, the unevenness in the interlayer conductivity was very small. The interlayer conductivity was very high. The CAI was also high enough for a primary structural material for an aircraft. In Example 3, the unevenness in the interlayer conductivity was decreased, compared with Comparative Example 2 in which the conductive particles E having the same degree of D50 as the conductive particles F were used. This is conceivably due to the contribution of the coefficient of variation of the particle size distribution of the conductive particles.

(Example 4)

Preparation of an epoxy resin composition, production of a prepreg, and evaluation were performed in the same manner as in Example 1 except that the conductive particles used were conductive particles G as shown in Table 2. The unevenness in the interlayer conductivity was sufficiently small. However, compared with Example 1 to Example 3 in which the conductive particles A, C, or F were used, a slight increase in the unevenness in the conductivity was observed, although the coefficient of variation of the particle size distribution was higher. This is considered to be partly because the conductive particles G have a smaller D50 than the conductive particles A, C, or F, and the small-diameter conductive particles penetrated into the CF layers during production of a prepreg, thus resulting in larger unevenness in the interlayer thickness in the resultant CFRP. Furthermore, it is considered that some of the particles penetrated into the CF layers, leading to unevenness in the number of conductive particles serving to connect the CF layers, and thus leading to unevenness in the interlayer conductivity. That is, it has been revealed that allowing D50 to be a sufficiently large value with respect to the average radius of the CFs, for example, a value four times the average radius of the CFs makes it possible to inhibit an increase in unevenness in the interlayer conductivity with higher accuracy. The interlayer conductivity was sufficiently high. The CAI was also high for a primary structural material for an aircraft.

(Example 5)

Preparation of an epoxy resin composition, production of a prepreg, and evaluation were performed in the same manner as in Example 1 except that the conductive particles used were conductive particles H as shown in Table 2. The conductive particles H are conductive polyamide particles. Having the coefficient of variation of the particle size distribution within a predetermined range resulted in sufficiently small unevenness in the interlayer conductivity. The interlayer conductivity was very high. The CAI was also high enough for a primary structural material for an aircraft.

(Example 6)

Preparation of an epoxy resin composition, production of a prepreg, and evaluation were performed in the same manner as in Example 1 except that the conductive particles used were conductive particles D as shown in Table 2. The unevenness in the interlayer conductivity was very small. The interlayer conductivity was very high. The CAI was also very high for a primary structural material for an aircraft.

(Example 7)

Preparation of an epoxy resin composition, production of a prepreg, and evaluation were performed in the same manner as in Example 1 except that the conductive particles used were conductive particles I as shown in Table 2. The unevenness in the interlayer conductivity was very small. The interlayer conductivity was very high. The CAI was also very high for a primary structural material for an aircraft.

(Example 8)

Preparation of an epoxy resin composition, production of a prepreg, and evaluation were performed in the same manner as in Example 1 except that the conductive particles used were conductive particles J as shown in Table 2. The unevenness in the interlayer conductivity was very small. The interlayer conductivity was very high. The CAI was very high for a primary structural material for an aircraft.

(Comparative Example 3)

Preparation of an epoxy resin composition, production of a prepreg, and evaluation were performed in the same manner as in Example 1 except that the conductive particles used were conductive particles K as shown in Table 2. The coefficient of variation of the particle size distribution of the conductive particles K was 25%, which was not sufficiently large, though larger than the coefficient of variation of the particle size distribution of the conductive particles B. Thus, the difference in interlayer conductivity between the center and edge of the panel was large in the same manner as in Comparative Example 1 and Comparative Example 2.

(Example 9)

Preparation of an epoxy resin composition, production of a prepreg, and evaluation were performed in the same manner as in Example 1 except that the amount of the thermoplastice resin in the first resin composition was changed as shown in Table 3. The results are shown in Table 5. The minimum viscosity of the resin composition was 0.6 Pa·s. The unevenness in the interlayer conductivity was larger than in Example 1, but was sufficiently small. The interlayer conductivity was sufficiently high. The CAI was also high enough for a primary structural material for an aircraft.

(Example 10)

Preparation of an epoxy resin composition, production of a prepreg, and evaluation were performed in the same manner as in Example 1 except that the amount of the thermoplastice resin in the first resin composition was changed as shown in Table 4. The results are shown in Table 5. The minimum viscosity of the resin composition was 0.3 Pa·s. The unevenness in the interlayer conductivity was larger than in Example 1 and Example 9, but was within a permissible range. As shown in Table 5, the unevenness in the interlayer conductivity ascends in the order of Example 1, Example 9, and Example 10. This is considered to be because, as the minimum viscosity decreased, the matrix resin increased in flow during molding, resulting in unevenness in the interlayer thickness between the center and edge of the panel, and thus, causing unevenness in the number of conductive particles serving to connect the CF layers. However, the interlayer conductivity was high. The CAI was high enough for a primary structural material for an aircraft.

(Example 11)

Preparation of an epoxy resin composition, production of a prepreg, and evaluation were performed in the same manner as in Example 1 except that the amount of non-conductive polyamide particles in the second resin composition was changed as shown in Table 6. The results are shown in Table 9. The unevenness in the interlayer conductivity was 17%, which was very small. The CAI was also high enough for a primary structural material for an aircraft.

(Example 12)

Preparation of an epoxy resin composition, production of a prepreg, and evaluation were performed in the same manner as in Example 2 except that the amount of non-conductive polyamide particles in the second resin composition was changed as shown in Table 6. The results are shown in Table 9. The unevenness in the interlayer conductivity was 17%, which was very small. The CAI was also high enough for a primary structural material for an aircraft.

(Example 13)

Preparation of an epoxy resin composition, production of a prepreg, and evaluation were performed in the same manner as in Example 1 except that the amount of non-conductive polyamide particles in the second resin composition was changed as shown in Table 7. The results are shown in Table 9. The unevenness in the interlayer conductivity was larger than in Example 1 and Example 11 in which the same conductive particles were used, but was within a permissible range. It is considered that Example 13 exhibited a smaller coefficient of variation of the interlayer thickness than Example 1 and Example 11, and thus, had a relatively smaller number of conductive particles serving g to connect the CF layers, resulting in being susceptible to the variation of the number of conductive particles serving to connect the CF layers, in which the variation is due to the variation of the interlayer thickness between the center and edge of the panel. However, the interlayer conductivity was high. The CAI was high enough for a primary structural material for an aircraft.

(Example 14)

Preparation of an epoxy resin composition, production of a prepreg, and evaluation were performed in the same manner as in Example 1 except that the amount of non-conductive polyamide particles in the second resin composition was changed as shown in Table 8. The results are shown in Table 9. The unevenness in the interlayer conductivity was very small. The interlayer conductivity was very high. The CAI was acceptable for a primary structural material for an aircraft, but was lower than in Example 1, Example 11, and Example 13, in which the same conductive particles were used.

[Table 1]

| | | First resin composition | Second resin composition |
|---|---|---|---|
| Epoxy resin | ELM434 | 55 | 55 |
| | EPICLON830 | 20 | 20 |
| | GOT | 25 | 25 |
| Thermoplastic resin | 5003P | 19 | 22 |
| Non-conductive polyamide particles | Polyamide 6 | - | 25 |
| Conductive particles | See Table 2. | - | 3.0 |
| Curing agent | 4,4'-DDS (SEIKACURE) | 40.3 | 40.3 |

[Table 2-1]

| Table 2 | | | Example 1 | Example 2 | Example 3 | Example 4 | Example 5 | Example 6 |
|---|---|---|---|---|---|---|---|---|
| Minimum viscosity of epoxy resin composition | | Pa·s | 0.9 | 0.9 | 0.9 | 0.9 | 0.9 | 0.9 |
| Conductive particles | Particle name | - | A | C | F | G | H | D |
| | D50 | μm | 20.3 | 17.1 | 19.7 | 8.2 | 12.1 | 27.6 |
| | D99 | μm | 64.4 | 53.1 | 45.4 | 60.1 | 40.4 | 66.4 |
| | D99/D50 | - | 3.2 | 3.1 | 2.3 | 7.3 | 3.3 | 2.4 |
| | Coefficient of variation | % | 62 | 56 | 41 | 130 | 67 | 54 |
| | Kurtosis | - | 3.2 | 3.9 | 4.2 | 4.5 | 3.3 | 3.6 |
| | Sphericity | % | 98 | 98 | 99 | 97 | 98 | 98 |
| Presence ratio of conductive particles from face of prepreg to depth of 15% | | - | 0.99 | 0.99 | 0.99 | 0.94 | 0.98 | 0.99 |
| Mass ratio of non-conductive polyamide particles in epoxy resin composition constituting prepreg | | mass% | 6.8 | 6.8 | 7.0 | 6.7 | 6.8 | 6.7 |

(continued)

| Table 2 | | | Example 1 | Example 2 | Example 3 | Example 4 | Example 5 | Example 6 |
|---|---|---|---|---|---|---|---|---|
| Coefficient of variation of thickness in one interlayer resin layer | | % | 32 | 31 | 28 | - | - | 33 |
| Interlayer conductivity | Ptc in edge of panel | S/m | 2.0 | 2.0 | 2.0 | 1.9 | 2.3 | 2.2 |
| | Pcc in center of panel | S/m | 1.7 | 1.8 | 1.6 | 1.3 | 1.7 | 1.9 |
| Rating of unevenness in interlayer conductivity | | % | 16 | 11 | 22 | 38 | 30 | 15 |
| | | Rating | Excellent | Excellent | Excellent | Possible | Good | Excellent |
| CAI | | MPa | 275 | 274 | 277 | 253 | 280 | 280 |

[Table 2-2]

| Table 2 (continued) | | | Example 7 | Example 8 | Comparative Example 1 | Comparative Example 2 | Comparative Example 3 |
|---|---|---|---|---|---|---|---|
| Minimum viscosity of epoxy resin composition | | Pa·s | 0.9 | 0.9 | 0.9 | 0.9 | 0.9 |
| Conductive particles | Particle name | - | I | J | B | E | K |
| | D50 | μm | 29.5 | 41.3 | 20.2 | 20.1 | 36.2 |
| | D99 | μm | 71.0 | 73.3 | 32.1 | 38.4 | 53.3 |
| | D99/D50 | - | 2.4 | 1.8 | 1.6 | 1.9 | 1.5 |
| | Coefficient of variation | % | 53 | 42 | 10 | 28 | 25 |
| | Kurtosis | - | 3.5 | 4.3 | 6.8 | 4.9 | 6.8 |
| | Sphericity | % | 98 | 98 | 98 | 97 | 98 |
| Presence ratio of conductive particles from face of prepreg to depth of 15% | | - | 0.98 | 0.98 | 0.97 | 0.96 | 0.98 |
| Mass ratio of non-conductive polyamide particles in epoxy resin composition constituting prepreg | | mass% | 6.9 | 6.8 | 6.7 | 6.8 | 6.8 |
| Coefficient of variation of thickness in one interlayer resin layer | | % | 33 | 35 | 23 | 24 | 35 |
| Interlayer conductivity | Ptc in edge of panel | S/m | 2.3 | 2.4 | 2.3 | 2.2 | 2.6 |
| | Pcc in center of panel | S/m | 2.0 | 1.9 | 1.2 | 1.3 | 1.5 |
| Rating of unevenness in interlayer conductivity | | % | 14 | 23 | 63 | 51 | 54 |
| | | Rating | Excellent | Excellent | Unacceptable | Unacceptable | Unacceptable |

(continued)

| Table 2 (continued) | | Example 7 | Example 8 | Comparative Example 1 | Comparative Example 2 | Comparative Example 3 |
|---|---|---|---|---|---|---|
| CAI | MPa | 271 | 254 | 275 | 276 | 273 |

[Table 3]

| | | First resin composition | Second resin composition |
|---|---|---|---|
| Epoxy resin | ELM434 | 55 | 55 |
| | EPICLON830 | 20 | 20 |
| | GOT | 25 | 25 |
| Thermoplastic resin | 5003P | 14 | 22 |
| Non-conductive polyamide particles | Polyamide 6 | - | 25 |
| Conductive particles | See Table 2. | - | 3.0 |
| Curing agent | 4,4'-DDS (SEIKACURE) | 40.3 | 40.3 |

[Table 4]

| | | First resin composition | Second resin composition |
|---|---|---|---|
| Epoxy resin | ELM434 | 55 | 55 |
| | EPICLON830 | 20 | 20 |
| | GOT | 25 | 25 |
| Thermoplastic resin | 5003P | 7 | 22 |
| Non-conductive polyamide particles | Polyamide 6 | - | 25 |
| Conductive particles | See Table 2. | - | 3.0 |
| Curing agent | 4,4'-DDS (SEIKACURE) | 40.3 | 40.3 |

[Table 5]

| | | Example 1 | Example 9 | Example 10 |
|---|---|---|---|---|
| Minimum viscosity of epoxy resin composition | Pa·s | 0.9 | 0.6 | 0.3 |
| Presence ratio of conductive particles from face of prepreg to depth of 15% | % | 99 | 99 | 99 |
| Mass ratio of non-conductive polyamide particles in epoxy resin composition constituting prepreg | mass% | 6.8 | 6.8 | 6.8 |
| Coefficient of variation of thickness in one interlayer resin layer | % | 32 | 32 | - |
| Interlayer conductivity | Ptc in edge of panel | S/m | 2 | 2.1 | 2.1 |
| | Pcc in center of panel | S/m | 1.7 | 1.5 | 1.3 |
| Rating of unevenness in interlayer conductivity | % | 16 | 33 | 47 |
| | Rating | Excellent | Good | Possible |
| CAI | MPa | 275 | 275 | 275 |

[Table 6]

| | | First resin composition | Second resin composition |
|---|---|---|---|
| Epoxy resin | ELM434 | 55 | 55 |
| | EPICLON830 | 20 | 20 |
| | GOT | 25 | 25 |
| Thermoplastic resin | 5003P | 19 | 22 |
| Non-conductive polyamide particles | Polyamide 6 | - | 35 |
| Conductive particles | See Table 2. | - | 3.2 |
| Curing agent | 4,4'-DDS (SEIKACURE) | 40.3 | 40.3 |

[Table 7]

| | | First resin composition | Second resin composition |
|---|---|---|---|
| Epoxy resin | ELM434 | 55 | 55 |
| | EPICLON830 | 20 | 20 |
| | GOT | 25 | 25 |
| Thermoplastic resin | 5003P | 19 | 22 |
| Non-conductive polyamide particles | Polyamide 6 | - | 55 |
| Conductive particles | See Table 2. | - | 3.5 |
| Curing agent | 4,4'-DDS (SEIKACURE) | 40.3 | 40.3 |

[Table 8]

| | | First resin composition | Second resin composition |
|---|---|---|---|
| Epoxy resin | ELM434 | 55 | 55 |
| | EPICLON830 | 20 | 20 |
| | GOT | 25 | 25 |
| Thermoplastic resin | 5003P | 19 | 22 |
| Non-conductive polyamide particles | Polyamide 6 | - | 15 |
| Conductive particles | See Table 2. | - | 2.9 |
| Curing agent | 4,4'-DDS (SEIKACURE) | 40.3 | 40.3 |

[Table 9]

| | | Example 1 | Example 2 | Example 11 | Example 12 | Example 13 | Example 14 |
|---|---|---|---|---|---|---|---|
| Minimum viscosity of epoxy resin composition | Pa·s | 0.9 | 0.9 | 0.9 | 0.9 | 1.0 | 0.8 |
| Presence ratio of conductive particles from face of prepreg to depth of 15% | - | 0.99 | 0.99 | 0.99 | 0.99 | 0.99 | 0.99 |

(continued)

| | | Example 1 | Example 2 | Example 11 | Example 12 | Example 13 | Example 14 |
|---|---|---|---|---|---|---|---|
| Mass ratio of non-conductive polyamide particles in epoxy resin composition constituting prepreg | mass% | 6.8 | 6.8 | 9.0 | 8.9 | 12.8 | 4.3 |
| Coefficient of variation of thickness in one interlayer resin layer | % | 32 | 31 | 31 | 30 | 27 | 33 |
| Interlayer conductivity | Ptc in edge of panel — S/m | 2.0 | 2.0 | 1.9 | 1.9 | 1.8 | 2.2 |
| | Pcc in center of panel — S/m | 1.7 | 1.8 | 1.6 | 1.6 | 1.3 | 1.9 |
| Rating of unevenness in interlayer conductivity | % | 16 | 11 | 17 | 17 | 32 | 15 |
| | Rating | Excellent | Excellent | Excellent | Excellent | Good | Excellent |
| CAI | MPa | 275 | 274 | 280 | 280 | 280 | 232 |

Industrial Applicability

A prepreg according to the present invention and a CFRP produced using the prepreg are widely applicable to industrial fields where a material needs conductivity. In particular, when used for a structural member of an aircraft, the prepreg and the CFRP can streamline conventional lightning protection systems such as metal foils and metal meshes, static elimination systems, electromagnetic-wave shielding systems, and the like, and thus, can be suitably used in the fields.

Reference Signs List

a: Square CFRP panel 300 mm wide and 300 mm long
b and b': Lines connecting the midpoints of the sides of the CFRP panel between opposite sides
c: Parts corresponding to the test pieces in the center of the CFRP panel
d: Parts corresponding to the test pieces at the edges of the CFRP panel

**Claims**

1. A prepreg comprising a carbon fiber impregnated with a matrix resin, wherein all or part of said matrix resin is an epoxy resin composition containing at least an epoxy resin, a curing agent, and conductive particles, wherein particle size distribution of said conductive particles has a coefficient of variation of 40% or more.

2. The prepreg according to claim 1, wherein median diameter (D50) of said conductive particles is equal to or larger than average radius of said carbon fiber.

3. The prepreg according to claim 1, wherein D99 ($\mu$m) of said conductive particle is equal to or smaller than $0.33 \times A$, wherein A is a value expressed in $g/m^2$, and obtained by rounding fiber areal weight in said prepreg to the nearest whole number.

4. The prepreg according to claim 1, wherein D50 ($\mu$m) of said conductive particles is equal to or smaller than $0.18 \times A$, wherein A is a value expressed in $g/m^2$, and obtained by rounding fiber areal weight in said prepreg to the nearest whole number.

5. The prepreg according to claim 1, wherein said epoxy resin composition has a minimum viscosity of 0.6 Pa·s or more, as measured under conditions of an angular frequency of 10 rad/s and a temperature ramp rate of 2°C/min.

6. The prepreg according to claim 1, wherein coefficient of variation of thickness in one interlayer resin layer in a carbon fiber reinforced composite material is 26% or more and 45% or less, wherein said carbon fiber reinforced composite material is obtained by pseudo-isotropically laminating said prepreg in a 16-ply form having a [+45°/0°/-45°/90°]2s constitution, and curing the resultant prepreg under heat and pressure under conditions of a temperature of 180°C, a pressure of 0.6 MPa, and a temperature ramp rate of 1.7°C/minute for 2 hours, using an autoclave.

7. The prepreg according to claim 1, wherein particle size distribution of said conductive particle has a kurtosis of 5 or less.

8. The prepreg according to claim 1, wherein said conductive particles are carbon particles or conductive polyamide particles.

9. The prepreg according to claim 1, further comprising non-conductive polyamide particles.

10. The prepreg according to claim 9, wherein mass ratio of said non-conductive polyamide particles is 4 mass% or more and 15 mass% or less, assuming that mass of said epoxy resin composition is 100 mass%.

11. A carbon fiber reinforced composite material obtained by laminating two or more sheets of said prepreg according to claim 1, and heat-curing the resultant prepreg.

12. The carbon fiber reinforced composite material according to claim 11, wherein coefficient of variation of thickness in one interlayer resin layer is 26% or more and 45% or less.

13. The carbon fiber reinforced composite material according to claim 11, wherein conductivity between adjacent carbon fibers is 0.1 S/m or more.

14. A structure obtained using said carbon fiber reinforced composite material according to claim 11, wherein shape of said structure is a shape of a structure selected from the group consisting of a flat-plate-shaped structure, cylindrical structure, box-shaped structure, C-shaped structure, H-shaped structure, L-shaped structure, T-shaped structure, I-shaped structure, Z-shaped structure, and hat-shaped structure.

[FIG. 1]

## INTERNATIONAL SEARCH REPORT

| | International application No. |
|---|---|
| | **PCT/JP2024/028210** |

**A. CLASSIFICATION OF SUBJECT MATTER**

*C08J 5/24*(2006.01)i
FI: C08J5/24 CFC

According to International Patent Classification (IPC) or to both national classification and IPC

**B. FIELDS SEARCHED**

Minimum documentation searched (classification system followed by classification symbols)

B29B11/16;15/08-15/14; C08J5/04-5/10;5/24; B32B1/00-43/00; C08K3/00-13/08; C08L1/00-101/14; C08G59/00-59/72; C08F 283/01;290/00-290/14;299/00-299/08; B29K63/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2012/124450 A1 (TORAY INDUSTRIES, INC.) 20 September 2012 (2012-09-20) whole document, particularly, claims, examples | 1-14 |
| A | JP 2013-173812 A (TORAY INDUSTRIES, INC.) 05 September 2013 (2013-09-05) whole document | 1-14 |
| A | JP 2015-519459 A (HEXCEL COMPOSITES LIMITED) 09 July 2015 (2015-07-09) whole document | 1-14 |
| A | JP 2011-168792 A (HEXCEL COMPOSITES LIMITED) 01 September 2011 (2011-09-01) whole document | 1-14 |
| A | WO 2015/146781 A1 (TORAY INDUSTRIES, INC.) 01 October 2015 (2015-10-01) whole document | 1-14 |
| A | WO 2022/004586 A1 (TORAY INDUSTRIES, INC.) 06 January 2022 (2022-01-06) whole document | 1-14 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 October 2024** | **22 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

| International application No. |
| --- |
| **PCT/JP2024/028210** |

### C.    DOCUMENTS CONSIDERED TO BE RELEVANT

| Category* | Citation of document, with indication, where appropriate, of the relevant passages | Relevant to claim No. |
| --- | --- | --- |
| A | WO 2023/074733 A1 (TORAY INDUSTRIES, INC.) 04 May 2023 (2023-05-04) whole document | 1-14 |

Form PCT/ISA/210 (second sheet) (July 2022)

## INTERNATIONAL SEARCH REPORT
### Information on patent family members

International application No.

**PCT/JP2024/028210**

| Patent document cited in search report | | | Publication date (day/month/year) | Patent family member(s) | | | Publication date (day/month/year) |
|---|---|---|---|---|---|---|---|
| WO | 2012/124450 | A1 | 20 September 2012 | US | 2013/0344305 | A1 | |
| | | | | whole document, particularly, claims, examples | | | |
| | | | | EP | 2687557 | A1 | |
| JP | 2013-173812 | A | 05 September 2013 | (Family: none) | | | |
| JP | 2015-519459 | A | 09 July 2015 | US | 2014/0217332 | A1 | |
| | | | | whole document | | | |
| | | | | GB | 201210602 | D | |
| | | | | WO | 2013/186389 | A1 | |
| | | | | EP | 2861657 | A1 | |
| | | | | AU | 2013276404 | A | |
| | | | | CA | 2875635 | A | |
| | | | | CN | 104379650 | A | |
| | | | | KR | 10-2015-0023734 | A | |
| | | | | RU | 2015100898 | A | |
| | | | | BR | 112014031120 | A | |
| | | | | ES | 2710929 | T | |
| JP | 2011-168792 | A | 01 September 2011 | US | 2008/0295955 | A1 | |
| | | | | whole document | | | |
| | | | | GB | 622060 | D | |
| | | | | WO | 2008/056123 | A1 | |
| | | | | EP | 2069138 | A1 | |
| | | | | CN | 101588919 | A | |
| | | | | ES | 2874484 | T | |
| WO | 2015/146781 | A1 | 01 October 2015 | US | 2017/0226299 | A1 | |
| | | | | whole document | | | |
| | | | | EP | 3093308 | A1 | |
| | | | | KR | 10-2016-0116021 | A | |
| | | | | CN | 106133036 | A | |
| WO | 2022/004586 | A1 | 06 January 2022 | US | 2023/0339222 | A1 | |
| | | | | whole document | | | |
| | | | | EP | 4140676 | A1 | |
| WO | 2023/074733 | A1 | 04 May 2023 | (Family: none) | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2011213991 A
- WO 2008056123 A
- WO 2011027160 A
- WO 2012084197 A
- WO 2012124450 A
- WO 2017110991 A
- WO 2016043156 A
- WO 20190314078 A
- WO 2018207728200 A

### Non-patent literature cited in the description

- **R. B. GREEGOR et al.** Finite Element Simulation and Experimental Analysis of Edge Glow for a Generic, 16-Ply Carbon Fiber Reinforced Plastic Composite Laminate. *ICOLSE 15 Paper*, 2015
- Structural Design of Aircraft. **TORIKAI** ; **KUZE**. Japan Aeronautical Engineering Association. 2003